# EUROPEAN PATENT SPECIFICATION

(11) **EP 3 641 148 B1**
(45) Date of publication and mention of the grant of the patent: **30.12.2020**
(21) Application number: 19186667.2
(22) Date of filing: 10.05.2013
(51) Int. Cl.: H04B 7/04

(54) **METHOD FOR DETERMINING PRECODING MATRIX INDICATOR, USER EQUIPMENT, AND BASE STATION**
VERFAHREN ZUR BESTIMMUNG EINES VORCODIERUNGSMATRIXINDIKATORS, BENUTZERVORRICHTUNG UND BASISSTATION
PROCÉDÉ POUR DÉTERMINER UN INDICATEUR DE MATRICE DE PRÉCODAGE, ÉQUIPEMENT UTILISATEUR ET STATION DE BASE

(43) Date of publication of application: 22.04.2020
(60) Divisional application: 20200157.4
(62) Document number(s) of the earlier application(s) in accordance with Art. 76 EPC: 13883972.5 / 2 988 430
(73) Proprietor: Huawei Technologies Co., Ltd., Longgang District Shenzhen, Guangdong 518129 (CN)
(72) Inventor: WANG, Jianguo, shenzhen, Guangdong (CN); ZHOU, Yongxing, shenzhen, Guangdong (CN); WU, Yong, shenzhen, Guangdong (CN); XIA, Liang, shenzhen, Guangdong (CN)
(74) Representative: Pfenning, Meinig & Partner mbB

(56) References cited:
- WO-A2-2011/136627
- PHILLIP A REGALIAT ET AL: "KRONECKER PRODUCTS, UNITARY MATRICES AND SIGNAL PROCESSING APPLICATIONS*", SOCIETY FOR INDUSTRIAL AND APPLIED MATHEMATICS, vol. 8, no. 31, 1 December 1989 (1989-12-01), pages 586-613, XP055258118,
- ALCATEL-LUCENT SHANGHAI BELL ET AL: "Considerations on CSI feedback enhancements for high-priority antenna configurations", 3GPP DRAFT; R1-112420 CONSIDERATIONS ON CSI FEEDBACK ENHANCEMENTS FOR HIGH-PRIORITY ANTENNA CONFIGURATIONS_CLEAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20110822, 18 August 2011 (2011-08-18), XP050537814,

## Description

### TECHNICAL FIELD

Embodiments of the present invention relate to the field of wireless communications, and in particular, to a method for determining a precoding matrix indicator, user equipment, and a base station.

### BACKGROUND

By using a transmit BF (Beam Forming, beam forming) or precoding technique and by using a receive signal combination technology, an MIMO (Multiple Input Multiple Output, multiple input multiple output) wireless system can obtain diversity and array gains. A typical system that uses BF or precoding may usually be represented as: $y = HVs + n$ where **y** is a received signal vector, **H** is a channel matrix, **V** is a precoding matrix, **s** is a transmitted symbol vector, and **n** is measured noise. Optimal precoding usually requires that a transmitter know entirely CSI (Channel State Information, channel state information). In a common method, user equipment quantizes instantaneous CSI and feeds back the instantaneous CSI to a base station. CSI information fed back by an existing LTE R8 system includes an RI (Rank Indicator, rank indicator), a PMI (Precoding Matrix Indicator, precoding matrix indicator), a CQI (Channel Quality Indicator, channel quality indicator), and the like, where the RI and the PMI indicate respectively a quantity of used layers and a used precoding matrix. A set of used precoding matrices is generally referred to as a codebook (sometimes each precoding matrix in the set is referred to as a code word). An existing LTE (Long Term Evolution, Long Term Evolution) R8 4-antenna codebook is designed based on Householder (Househoulder) transformation, and an R10 system further introduces double-codebook design for 8-antenna. The foregoing two codebooks are mainly for antenna design of a common base station. A common base station uses a fixed or remote electrical tilt downtilt to control a beam direction of an antenna in a vertical direction, and a beam direction of the antenna may be adjusted dynamically through precoding or beam forming only in a horizontal direction. at the same time, an AAS (Active Antenna Systems, active antenna system) has been widely deployed in practice. For the currently launched LTE R12 standard, enhancement of communication performance after the AAS system is introduced is considered. Compared with a conventional base station antenna, the AAS further provides design flexibility in a vertical direction, and meanwhile, for convenience of deployment, antenna ports in the ASS may be further increased. For example, a quantity of antenna ports included in the current LTE R12 and future evolved versions may be 8, 16, 32, 64 or even larger. A new requirement for codebook design, especially in aspects such as precoding performance, feedback overhead compromise, and air interface support, is proposed. In such a background, a new design solution for an AAS base station antenna, and especially for a precoding matrix and a feedback process of the AAS base station antenna, needs to be proposed.

WO 2011/136627 A2 discusses a communication method of a receiver in a multiple input multiple output (MIMO) communication system. The system includes a transmitter having eight transmit antennas and the receiver. The communication method includes: extracting, from a memory storing a first codebook having a 3-bit size and a second codebook having a one-bit size, a 3-bit first precoding matrix indicator corresponding to a first codeword included in the first codebook and a one-bit second precoding matrix indicator corresponding to a second codeword included in the second codebook; and transmitting, to the transmitter, the 3-bit first precoding matrix indicator and the one-bit second precoding matrix indicator.

PHILLIP A REGALIAT AL: "KNONECKER PRODUCTS, UNITARY MATRICES AND SIGNAL PROCESSING APPLICATIONS", SOCIETY FOR INDUSTRIAL AND APPLIED MATHEMATICS, vol. 8, no. 31, 1 December 1989, pages 586-613 discusses that a discrete Fourier transformation (DFT) matrix can be represented as a product of two matrices.

3rd Generation Partnership Project (3GPP) contribution R1-112420 discusses a codebook structure for 3D-beamforming. In particular, according to R1-112420, channel state information (CSI) feedback includes a vertical CSI and a horizontal CSI.

### SUMMARY

The present invention is set out in the appended independent claims whereas preferred embodiments are outlined in the dependent claims.

### BRIEF DESCRIPTION OF DRAWINGS

The invention is defined by the appended claims. In the following, embodiments not falling within the scope of the claims should be understood as examples useful to understand the invention.

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for determining a precoding matrix indicator according to an embodiment of the present invention;
FIG. 2 is a flowchart of a method for determining a precoding matrix indicator according to another embodiment of the present invention;
FIG. 3 is a schematic flowchart of a multi-antenna transmission method according to an embodiment of the present invention;
FIG. 4 is a block diagram of user equipment according to an embodiment of the present invention;
FIG. 5 is a block diagram of a base station according to an embodiment of the present invention;
FIG. 6 is a block diagram of user equipment according to another embodiment of the present invention; and
FIG. 7 is a block diagram of a base station according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention.

The technical solutions of the present invention may be applied to various communications systems, such as: a Global System for Mobile Communications (GSM, Global System of Mobile communication), a Code Division Multiple Access (CDMA, Code Division Multiple Access) system, a Wideband Code Division Multiple Access (WCDMA, Wideband Code Division Multiple Access Wireless), a general packet radio service (GPRS, General Packet Radio Service), and a Long Term Evolution (LTE, Long Term Evolution).

User equipment (UE, User Equipment), also referred to as a mobile terminal (Mobile Terminal), a mobile user equipment, and the like, may communicate with one or more core networks through a radio access network (for example, RAN, Radio Access Network). The user equipment may be a mobile terminal, such as a mobile phone (also referred to as a "cellular" phone) and a computer with a mobile terminal. For example, the user equipment may be a portable, pocket-sized, handheld, computer built-in, or in-vehicle mobile apparatus, or may be a relay (Relay), and the user equipment exchanges language and/or data with the radio access network.

A base station may be a base station (BTS, Base Transceiver Station) in the GSM or CDMA, may also be a base station (NodeB) in the WCDMA, and may further be an evolved NodeB (eNB or e-NodeB, evolved Node B) or relay (Relay) in the LTE, which is not limited in the present invention.

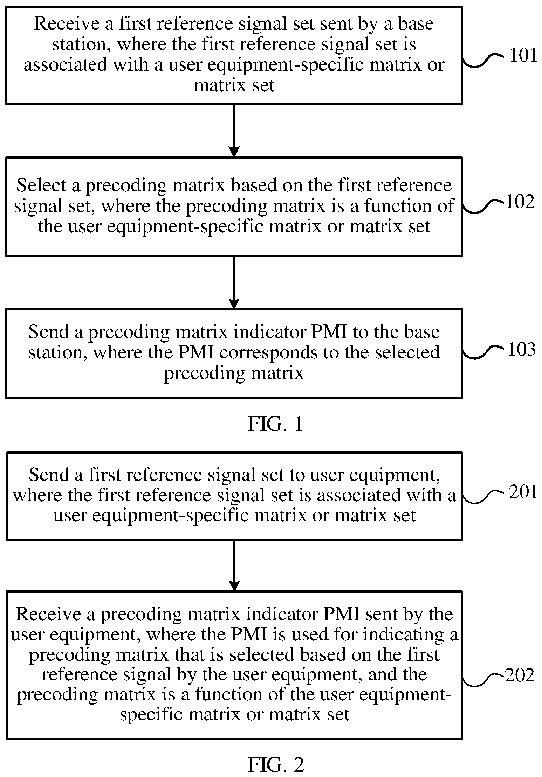

FIG. 1 is a flowchart of a method for determining a precoding matrix indicator according to an embodiment of the present invention. The method in FIG. 1 is executed by user equipment (for example, UE).

101: Receive a first reference signal set sent by a base station, where the first reference signal set is associated with a user equipment-specific (UE-specific) matrix or matrix set.

102: Select a precoding matrix based on the first reference signal set, where the precoding matrix is a function of a user equipment-specific matrix or matrix set.

103: Send a precoding matrix indicator PMI to the base station, where the PMI corresponds to the selected precoding matrix.

In this embodiment of the present invention, a first reference signal set is associated with a user equipment-specific matrix or matrix set, a precoding matrix is a function of the user equipment-specific matrix or matrix set, so that user equipment can select, based on the user equipment-specific matrix or matrix set, the precoding matrix and feed back a PMI, and a set of the precoding matrix forms a user equipment-specific codebook but not a cell specific codebook or system specific codebook (cell specific codebook or system specific codebook). The cell specific codebook or system specific codebook is a precoding matrix set designed for all users in a cell or a system, while the user equipment-specific codebook is a subset of the cell specific codebook or system specific codebook. Therefore, in this embodiment of the present invention, CSI feedback precision can be improved without excessively increasing feedback overhead, thereby improving system performance.

It should be understood that a matrix may include a multi-row multi-column matrix, or may also include a multi-row single-column vector, a single-row multi-column vector, or a scalar (single-row single-column matrix).

Optionally, as an embodiment, the user equipment-specific matrix or matrix set is notified by the base station to the user equipment.

Optionally, as another embodiment, before step 101, the user equipment may further receive a second reference signal set sent by the base station, where the second reference signal set is associated with a matrix or matrix set. Based on the second reference signal set, the user equipment determines and sends a second index to the base station. The second index is used for indicating an antenna port or antenna port subset selected by the user equipment, or a subset of a matrix or matrix set that is associated with the antenna port or antenna port subset selected by the user equipment.

Optionally, the first reference signal set may be a subset of the second reference signal set.

Optionally, as another embodiment, when receiving the second reference signal set sent by the base station, the user equipment may receive reference signals of the second reference signal set that are sent at different times by the base station. Here, different times may be associated with a same matrix or different matrices separately, or may be associated with a same subset or different subsets of a matrix set separately.

Optionally, the matrix or matrix set associated with the second reference signal set is cell specific or system specific.

Optionally, as another embodiment, the first reference signal set includes one or more reference signal subsets, and the reference signal subset corresponds to a co-polarized antenna port subset, or corresponds to an antenna port subset that is arranged in a same direction in an antenna port array, or corresponds to a quasi-co-location (Quasi-Co-Location, QCL for short) antenna port subset.

Optionally, as another embodiment, when receiving the first reference signal set sent by the base station, the user equipment may receive reference signals of the first reference signal set that are sent at different times by the base station. Here, different times may be associated with a same matrix or different matrices separately, or may be associated with a same subset or different subsets of a matrix set separately.

Optionally, as another embodiment, the precoding matrix **W** is a product of two matrices **W₁** and **W**₂. $W = {W}_{1} {W}_{2}$ (1)

The matrix **W**₁ is a block diagonal matrix. The block diagonal matrix includes at least one block matrix, and each block matrix is a function of the user equipment-specific matrix or matrix set.

Optionally, the matrix **W₂** is used to select or perform weighted combination on column vectors in the matrix **W**₁, so as to form the matrix **W**.

Optionally, as another embodiment, each block matrix **X** is a Kronecker (kronecker) product of two matrices **C** and **D, X** = **C**⊗**D.** At least one matrix in the two matrices **C** and **D** is a function of the user equipment-specific matrix or matrix set.

Optionally, as another embodiment, columns of at least one matrix in the two matrices **C** and **D** are rotations of column vectors in a matrix in a subset of the user equipment-specific matrix or matrix set, that is, a k^{th} column vector **c***ₖ* of the matrix **C** is: ${c}_{k} = diag \left\{1, {e}^{j 2 π / {N}_{C}}, ⋯, {e}^{j 2 {πN}_{V} / {N}_{C}}\right\} {a}_{m} ,$ (2) or ${c}_{k} = diag \left\{1,{e}^{j 2 π / {N}_{C}},⋯,{e}^{j 2 π \left({N}_{V}/2-1\right) / {N}_{C}},{e}^{{jθ}_{Δ}},{e}^{{jθ}_{Δ}}{e}^{j 2 π / {N}_{C}},⋯,{e}^{{jθ}_{Δ}}{e}^{j 2 π \left({N}_{V}/2-1\right) / {N}_{C}}\right\} {a}_{m} ,$ (3) or, an l^{th} column vector **d***ₗ* of the matrix **D** is: ${d}_{l} = diag \left\{1, {e}^{j 2 π / {N}_{D}}, ⋯, {e}^{j 2 {πN}_{H} / {N}_{D}}\right\} {a}_{m} ,$ (4) or ${d}_{l} = diag \left\{1,{e}^{j 2 π / {N}_{D}},⋯,{e}^{j 2 π \left({N}_{H}/2-1\right) / {N}_{D}},{e}^{{jϕ}_{Δ}},{e}^{{jϕ}_{Δ}}{e}^{j 2 π / {N}_{D}},⋯,{e}^{{jϕ}_{Δ}}{e}^{j 2 π \left({N}_{H}/2-1\right) / {N}_{D}}\right\} {a}_{m} ,$ (5) where *N_{V}, N_{H}, N_{C},* and *N_{D}* are positive integers, **a***ₘ* is an m^{th} column vector of a matrix **A**, the matrix **A** is a matrix in the user equipment-specific matrix or matrix set, and *θ*_{△} and *φ*_{△} are phase shifts whose values may be 0,*π*,±*π*/2,±*π*/4,±*π*/8, and so on.

It should be noted that a value of *N_{C}* or *N_{D}* may be infinite, and therefore 2*π*/*N*_{C}=0 or 2*π*/*N*_{D}=0, and in this case, **c***ₖ*=**a***ₘ*, **c***ₖ*=*diag*{1,1,···,1,e*^{jθ_{^}},e^{jθ_{^}}*,···*,e^{jθ_{^}}*}**a***ₘ*, **d***ₗ*=**a***ₘ* or **d***ₗ* = *diag* {1,1,···,1,*e*^{*jφ*_{△}}*,e*^{*jφ*_{△}},···,*e*^{*jφ*_{△}}}**a***ₘ*.

It should be noted that, that column vectors of the matrix **C** or matrix **D** that corresponds to the block matrix **X** at a different location on a diagonal in **W**₁ satisfy the expressions (2) to (5) does not mean that the block matrix **X** at a different location on a diagonal in **W**₁ has a same matrix **C** or matrix **D;** in contrast, the block matrix **X** at a different location may have a same or different matrix **C** or matrix **D.**

Optionally, as another embodiment, a matrix in the user equipment-specific matrix or matrix set is a matrix formed by columns being discrete Fourier transformation (DFT, Discrete Fourier Transformation) vectors, or a matrix formed by column vectors of a Hadamard (Hadamard) matrix or a Householder (Householder) matrix.

Optionally, as another embodiment, the DFT vector **a***ₗ* satisfies: ${a}_{l} = {\left[\begin{matrix}{e}^{j \frac{2 π ⋅ 0 ⋅ l}{N}} & {e}^{j \frac{2 π ⋅ 1 ⋅ l}{N}} & ⋯ & {e}^{j \frac{2 π ⋅ \left(M-1\right) ⋅ l}{N}}\end{matrix}\right]}^{T}$ (6) where []^{T} is a matrix transpose, M and N are positive integers, and *N_{C}* ≥ *N* or *N_{D}* ≥ *N.*

Optionally, as another embodiment, the first reference signal set includes at least one reference signal subset, and the reference signal subset is associated with a set of the matrix **C** or the matrix **D.**

Optionally, as another embodiment, the reference signal subset has a sending period longer than that of another reference signal.

As an embodiment of the present invention, the precoding matrix **W** may be the following matrix: ${\left(2M\right)}^{- \frac{1}{2}} {\left[\begin{matrix}1 & {e}^{jθ} & ⋯ & {e}^{j \left(M-1\right) θ} & {e}^{jφ} & {e}^{j \left(φ+θ\right)} & ⋯ & {e}^{j \left(φ+\left(M-1\right)θ\right)}\end{matrix}\right]}^{T}$ or, ${\left(4M\right)}^{- \frac{1}{2}} \left[\begin{matrix}{\left[\begin{matrix}1 & {e}^{jθ} & ⋯ & {e}^{j \left(M-1\right) θ} & {e}^{jϕ} & {e}^{j \left(ϕ+θ\right)} & ⋯ & {e}^{j \left(ϕ+\left(M-1\right)θ\right)}\end{matrix}\right]}^{T} \\ {e}^{jφ} {\left[\begin{matrix}1 & {e}^{jθ} & ⋯ & {e}^{j \left(M-1\right) θ} & {e}^{jϕ} & {e}^{j \left(ϕ+θ\right)} & ⋯ & {e}^{j \left(ϕ+\left(M-1\right)θ\right)}\end{matrix}\right]}^{T}\end{matrix}\right]$ or, ${\left(2NM\right)}^{- \frac{1}{2}} \left[\begin{matrix}\left[\begin{matrix}{\left[\begin{matrix}1 & {e}^{jθ} & ⋯ & {e}^{j \left(M-1\right) θ}\end{matrix}\right]}^{T} \\ {e}^{jϕ} {\left[\begin{matrix}1 & {e}^{jθ} & ⋯ & {e}^{j \left(M-1\right) θ}\end{matrix}\right]}^{T} \\ ⋯ \\ {e}^{j \left(N-1\right) ϕ} {\left[\begin{matrix}1 & {e}^{jθ} & ⋯ & {e}^{j \left(M-1\right) θ}\end{matrix}\right]}^{T}\end{matrix}\right] \\ {e}^{jφ} \left[\begin{matrix}{\left[\begin{matrix}1 & {e}^{jθ} & ⋯ & {e}^{j \left(M-1\right) θ}\end{matrix}\right]}^{T} \\ {e}^{jϕ} {\left[\begin{matrix}1 & {e}^{jθ} & ⋯ & {e}^{j \left(M-1\right) θ}\end{matrix}\right]}^{T} \\ ⋯ \\ {e}^{j \left(N-1\right) ϕ} {\left[\begin{matrix}1 & {e}^{jθ} & ⋯ & {e}^{j \left(M-1\right) θ}\end{matrix}\right]}^{T}\end{matrix}\right]\end{matrix}\right]$ where *ϕ* = 0,*π*/2,*π*,3*π*/2..., $θ = \frac{π}{16} \left(2{i}_{1}+⌊ {i}_{2} / 4 ⌋\right) ,$ *i*₁ = 0,...,15, *i*₂ = 0,...,15 , and a symbol "└*x*┘" represents a maximum integer that is not greater than x. $ϕ = \frac{kπ}{32} ,$ *k* = 0,...,15,...,32, and so on, or *k* = 0,±1,...,±15,±16, and so on.

***M*** is a positive integer; for example, a value of ***M*** may be 1, 2, 4, 6, 8, 16, 32, 64, and so on. *N* is a positive integer; for example, a value of *N* may be 1, 2, 4, 6, 8, 16, 32, 64, and so on.

As another embodiment of the present invention, the precoding matrix **W** may be the following matrix: ${\left(4NM\right)}^{- \frac{1}{2}} \left[\begin{matrix}\left[\begin{matrix}{\left[\begin{matrix}1 & {e}^{jθ} & ⋯ & {e}^{j \left(M-1\right) θ}\end{matrix}\right]}^{T} & {\left[\begin{matrix}1 & {e}^{jθ} & ⋯ & {e}^{j \left(M-1\right) θ}\end{matrix}\right]}^{T} \\ {e}^{jϕ} {\left[\begin{matrix}1 & {e}^{jθ} & ⋯ & {e}^{j \left(M-1\right) θ}\end{matrix}\right]}^{T} & {e}^{jϕ} {\left[\begin{matrix}1 & {e}^{jθ} & ⋯ & {e}^{j \left(M-1\right) θ}\end{matrix}\right]}^{T} \\ ⋯ & ⋯ \\ {e}^{j \left(N-1\right) ϕ} {\left[\begin{matrix}1 & {e}^{jθ} & ⋯ & {e}^{j \left(M-1\right) θ}\end{matrix}\right]}^{T} & {e}^{j \left(N-1\right) ϕ} {\left[\begin{matrix}1 & {e}^{jθ} & ⋯ & {e}^{j \left(M-1\right) θ}\end{matrix}\right]}^{T}\end{matrix}\right] \\ \left[\begin{matrix}{\left[\begin{matrix}1 & {e}^{jθ} & ⋯ & {e}^{j \left(M-1\right) θ}\end{matrix}\right]}^{T} & - {\left[\begin{matrix}1 & {e}^{jθ} & ⋯ & {e}^{j \left(M-1\right) θ}\end{matrix}\right]}^{T} \\ {e}^{jϕ} {\left[\begin{matrix}1 & {e}^{jθ} & ⋯ & {e}^{j \left(M-1\right) θ}\end{matrix}\right]}^{T} & - {e}^{jϕ} {\left[\begin{matrix}1 & {e}^{jθ} & ⋯ & {e}^{j \left(M-1\right) θ}\end{matrix}\right]}^{T} \\ ⋯ & ⋯ \\ {e}^{j \left(N-1\right) ϕ} {\left[\begin{matrix}1 & {e}^{jθ} & ⋯ & {e}^{j \left(M-1\right) θ}\end{matrix}\right]}^{T} & - {e}^{j \left(N-1\right) ϕ} {\left[\begin{matrix}1 & {e}^{jθ} & ⋯ & {e}^{j \left(M-1\right) θ}\end{matrix}\right]}^{T}\end{matrix}\right]\end{matrix}\right]$ or ${\left(4NM\right)}^{- \frac{1}{2}} \left[\begin{matrix}\left[\begin{matrix}{\left[\begin{matrix}1 & {e}^{jθ} & ⋯ & {e}^{j \left(M-1\right) θ}\end{matrix}\right]}^{T} & {\left[\begin{matrix}1 & {e}^{jθ} & ⋯ & {e}^{j \left(M-1\right) θ}\end{matrix}\right]}^{T} \\ {e}^{jϕ} {\left[\begin{matrix}1 & {e}^{jθ} & ⋯ & {e}^{j \left(M-1\right) θ}\end{matrix}\right]}^{T} & {e}^{jϕ} {\left[\begin{matrix}1 & {e}^{jθ} & ⋯ & {e}^{j \left(M-1\right) θ}\end{matrix}\right]}^{T} \\ ⋯ & ⋯ \\ {e}^{j \left(N-1\right) ϕ} {\left[\begin{matrix}1 & {e}^{jθ} & ⋯ & {e}^{j \left(M-1\right) θ}\end{matrix}\right]}^{T} & {e}^{j \left(N-1\right) ϕ} {\left[\begin{matrix}1 & {e}^{jθ} & ⋯ & {e}^{j \left(M-1\right) θ}\end{matrix}\right]}^{T}\end{matrix}\right] \\ \left[\begin{matrix}j {\left[\begin{matrix}1 & {e}^{jθ} & ⋯ & {e}^{j \left(M-1\right) θ}\end{matrix}\right]}^{T} & - j {\left[\begin{matrix}1 & {e}^{jθ} & ⋯ & {e}^{j \left(M-1\right) θ}\end{matrix}\right]}^{T} \\ {je}^{jϕ} {\left[\begin{matrix}1 & {e}^{jθ} & ⋯ & {e}^{j \left(M-1\right) θ}\end{matrix}\right]}^{T} & - {je}^{jϕ} {\left[\begin{matrix}1 & {e}^{jθ} & ⋯ & {e}^{j \left(M-1\right) θ}\end{matrix}\right]}^{T} \\ ⋯ & ⋯ \\ {je}^{j \left(N-1\right) ϕ} {\left[\begin{matrix}1 & {e}^{jθ} & ⋯ & {e}^{j \left(M-1\right) θ}\end{matrix}\right]}^{T} & - {je}^{j \left(N-1\right) ϕ} {\left[\begin{matrix}1 & {e}^{jθ} & ⋯ & {e}^{j \left(M-1\right) θ}\end{matrix}\right]}^{T}\end{matrix}\right]\end{matrix}\right]$ where $θ = \frac{π}{16} \left(2{i}_{1}+⌊ {i}_{2} / 4 ⌋\right) ,$ *i*₁ = 0,...,15, *i*₂ = 0,...,15, and a symbol " └*x*┘ " represents a maximum integer that is not greater than x. $ϕ = \frac{kπ}{32} ,$ *k* = 0,...,15,...,32, and so on, or *k* = 0,±1,...,±15,±16, and so on.

***M*** is a positive integer; for example, a value of ***M*** may be 1, 2, 4, 6, 8, 16, 32, 64, and so on. *N* is a positive integer; for example, a value of *N* may be 1, 2, 4, 6, 8, 16, 32, 64, and so on.

It can be known from studying the precoding matrix **W**, the precoding matrix **W** may match an actually deployed antenna configuration; because granularity of a value of *θ* is *π*/16, more precise space quantization can be implemented, and feedback precision of CSI can be improved; besides, two columns of the precoding matrix **W** are orthogonal to each other, and interference between layers can be reduced.

FIG. 2 is a flowchart of a method for determining a precoding matrix indicator according to another embodiment of the present invention. The method in FIG. 2 is executed by a base station (for example, eNB).

201: Send a first reference signal set to user equipment, where the first reference signal set is associated with a user equipment-specific (UE specific) matrix or matrix set.

202: Receive a precoding matrix indicator PMI sent by the user equipment, where the PMI is used for indicating a precoding matrix that is selected based on the first reference signal by the user equipment, and the precoding matrix is a function of the user equipment-specific matrix or matrix set.

In this embodiment of the present invention, a first reference signal set is associated with a subset of a user equipment-specific matrix or matrix set, a precoding matrix is a function of the user equipment-specific matrix or matrix set, so that user equipment can select, based on the subset of the matrix or matrix set, the precoding matrix and feed back a PMI, and a set of the precoding matrix forms a user equipment-specific codebook but not a cell specific codebook or system specific codebook. The cell specific codebook or system specific codebook is a precoding matrix set designed for all users in a cell or a system, while the user equipment-specific codebook is a subset of the cell specific codebook or system specific codebook. Therefore, in this embodiment of the present invention, CSI feedback precision can be improved without excessively increasing feedback overhead, thereby improving system performance.

Optionally, the precoding matrix may also be obtained according to the received PMI.

Optionally, as an embodiment, the user equipment-specific matrix or matrix set is notified by the base station to the user equipment.

Optionally, as another embodiment, before step 201, the base station may further send a second reference signal set to the user equipment, where the second reference signal set is associated with a matrix or matrix set. Then, the base station receives a second index that is determined based on the second reference signal set by the user equipment. The second index is used for indicating an antenna port or antenna port subset selected by the user equipment, or a matrix or matrix set that is associated with the antenna port or antenna port subset selected by the user equipment.

Optionally, the first reference signal set is a subset of the second reference signal set.

Optionally, as another embodiment, when sending the second reference signal set to the user equipment, the base station may send reference signals of the second reference signal set to the user equipment at different times.

Optionally, the matrix or matrix set associated with the second reference signal set is cell specific or system specific.

Optionally, as an embodiment, before step 201, the base station may further measure an uplink physical channel or an uplink physical signal, to obtain channel estimation of the user equipment according to channel reciprocity. Based on a predefined criterion, the first reference signal and the user equipment-specific matrix or matrix set are selected for a user. The uplink physical channel may be a physical uplink control channel (Physical Uplink Control Channel, PUCCH for short) or a physical uplink shared channel (Physical Uplink Shared Channel, PUSCH for short); the physical signal may be a sounding reference signal (Sounding Reference Signal, SRS for short) or another uplink demodulation reference signal (DeModulation Reference signal, DMRS for short).

Optionally, as another embodiment, the first reference signal set may include one or more reference signal subsets. The reference signal subset corresponds to a co-polarized antenna port subset, or corresponds to an antenna port subset that is arranged in a same direction in an antenna port array, or corresponds to a quasi-co-location antenna port subset.

Optionally, as another embodiment, in step 201, the base station may send subsets of the first reference signal set to the user equipment at different times. Here, different times may be associated with a same matrix or different matrices separately, or may be associated with a same subset or different subsets of a matrix set separately.

Optionally, as another embodiment, the precoding matrix W is a product of two matrices **W**₁ and **W**₂, W = **W**₁**W**₂, where the matrix **W**₁ is a block diagonal matrix, the block diagonal matrix includes at least one block matrix, and each block matrix is a function of the user equipment-specific matrix or matrix set.

Optionally, the matrix **W**₂ is used to select or perform weighted combination on column vectors in the matrix **W**₁, so as to form the matrix **W** .

Optionally, as another embodiment, each block matrix **X** is a kronecker product of two matrices **C** and **D, X** = **C**⊗**D**. At least one matrix in the two matrices **C** and **D** is a function of the user equipment-specific matrix or matrix set.

Optionally, as another embodiment, columns of at least one matrix in the two matrices **C** and **D** are rotations of column vectors in a matrix in the user equipment-specific matrix or matrix set, that is, a k^{th} column vector **c***ₖ* of the matrix **C** is shown in the expression (2) or (3); or, an l^{th} column vector **d***ₗ* of the matrix **D** is shown in the expression (4) or (5), where *N_{V}, N_{H}, N_{C},* and *N_{D}* are positive integers, **a***ₘ* is an m^{th} column vector of a matrix **A**, and the matrix **A** is a matrix in the user equipment-specific matrix or matrix set.

It should be noted that, that column vectors of the matrix **C** or matrix **D** that corresponds to the block matrix **X** at a different location on a diagonal in **W₁** satisfy the expressions (2) to (5) does not mean that the block matrix **X** at a different location on a diagonal in **W**₁ has a same matrix **C** or matrix **D;** in contrast, the block matrix **X** at a different location may have a same or different matrix **C** or matrix **D.**

Optionally, as another embodiment, a matrix in the user equipment-specific matrix or matrix set is a matrix formed by columns being DFT vectors, or a matrix formed by column vectors of a Hadamard matrix or a Householder matrix.

Optionally, as another embodiment, the DFT vector **a***ₗ* is shown in the expression (6), where *N_{C}* ≥ *N* or *N_{D}* ≥ *N*.

Optionally, as another embodiment, the first reference signal set includes at least one reference signal subset, and the reference signal subset is associated with a set of the matrix **C** or the matrix **D.**

Optionally, as another embodiment, the reference signal subset has a sending period longer than that of another reference signal.

As an embodiment of the present invention, the precoding matrix **W** may be the following matrix: ${\left(2M\right)}^{- \frac{1}{2}} {\left[\begin{matrix}1 & {e}^{jθ} & ⋯ & {e}^{j \left(M-1\right) θ} & {e}^{jφ} & {e}^{j \left(φ+θ\right)} & ⋯ & {e}^{j \left(φ+\left(M-1\right)θ\right)}\end{matrix}\right]}^{T}$ or, ${\left(4M\right)}^{- \frac{1}{2}} \left[\begin{matrix}{\left[\begin{matrix}1 & {e}^{jθ} & ⋯ & {e}^{j \left(M-1\right) θ} & {e}^{jϕ} & {e}^{j \left(ϕ+θ\right)} & ⋯ & {e}^{j \left(ϕ+\left(M-1\right)θ\right)}\end{matrix}\right]}^{T} \\ {e}^{jφ} {\left[\begin{matrix}1 & {e}^{jθ} & ⋯ & {e}^{j \left(M-1\right) θ} & {e}^{jϕ} & {e}^{j \left(ϕ+θ\right)} & ⋯ & {e}^{j \left(ϕ+\left(M-1\right)θ\right)}\end{matrix}\right]}^{T}\end{matrix}\right]$ or, ${\left(2NM\right)}^{- \frac{1}{2}} \left[\begin{matrix}\left[\begin{matrix}{\left[\begin{matrix}1 & {e}^{jθ} & ⋯ & {e}^{j \left(M-1\right) θ}\end{matrix}\right]}^{T} \\ {e}^{jϕ} {\left[\begin{matrix}1 & {e}^{jθ} & ⋯ & {e}^{j \left(M-1\right) θ}\end{matrix}\right]}^{T} \\ ⋯ \\ {e}^{j \left(N-1\right) ϕ} {\left[\begin{matrix}1 & {e}^{jθ} & ⋯ & {e}^{j \left(M-1\right) θ}\end{matrix}\right]}^{T}\end{matrix}\right] \\ {e}^{jφ} \left[\begin{matrix}{\left[\begin{matrix}1 & {e}^{jθ} & ⋯ & {e}^{j \left(M-1\right) θ}\end{matrix}\right]}^{T} \\ {e}^{jϕ} {\left[\begin{matrix}1 & {e}^{jθ} & ⋯ & {e}^{j \left(M-1\right) θ}\end{matrix}\right]}^{T} \\ ⋯ \\ {e}^{j \left(N-1\right) ϕ} {\left[\begin{matrix}1 & {e}^{jθ} & ⋯ & {e}^{j \left(M-1\right) θ}\end{matrix}\right]}^{T}\end{matrix}\right]\end{matrix}\right]$ where *ϕ* = 0,π/2*,π*,3*π*/2..., $θ = \frac{π}{16} \left(2{i}_{1}+⌊ {i}_{2} / 4 ⌋\right) ,$ *i*₁ = 0,...,15 , *i*₂ = 0,...,15, and a symbol "└*x*┘" represents a maximum integer that is not greater than x. $ϕ = \frac{kπ}{32} ,$ *k* = 0,...,15,...,32, and so on, or *k* = 0,±1,...,±15,±16, and so on.

***M*** is a positive integer; for example, a value of ***M*** may be 1, 2, 4, 6, 8, 16, 32, 64, and so on. *N* is a positive integer; for example, a value of *N* may be 1, 2, 4, 6, 8, 16, 32, 64, and so on.

As another embodiment of the present invention, the precoding matrix **W** may be the following matrix: ${\left(4NM\right)}^{- \frac{1}{2}} \left[\begin{matrix}\left[\begin{matrix}{\left[\begin{matrix}1 & {e}^{jθ} & ⋯ & {e}^{j \left(M-1\right) θ}\end{matrix}\right]}^{T} & {\left[\begin{matrix}1 & {e}^{jθ} & ⋯ & {e}^{j \left(M-1\right) θ}\end{matrix}\right]}^{T} \\ {e}^{jϕ} {\left[\begin{matrix}1 & {e}^{jθ} & ⋯ & {e}^{j \left(M-1\right) θ}\end{matrix}\right]}^{T} & {e}^{jϕ} {\left[\begin{matrix}1 & {e}^{jθ} & ⋯ & {e}^{j \left(M-1\right) θ}\end{matrix}\right]}^{T} \\ ⋯ & ⋯ \\ {e}^{j \left(N-1\right) ϕ} {\left[\begin{matrix}1 & {e}^{jθ} & ⋯ & {e}^{j \left(M-1\right) θ}\end{matrix}\right]}^{T} & {e}^{j \left(N-1\right) ϕ} {\left[\begin{matrix}1 & {e}^{jθ} & ⋯ & {e}^{j \left(M-1\right) θ}\end{matrix}\right]}^{T}\end{matrix}\right] \\ \left[\begin{matrix}{\left[\begin{matrix}1 & {e}^{jθ} & ⋯ & {e}^{j \left(M-1\right) θ}\end{matrix}\right]}^{T} & - {\left[\begin{matrix}1 & {e}^{jθ} & ⋯ & {e}^{j \left(M-1\right) θ}\end{matrix}\right]}^{T} \\ {e}^{jϕ} {\left[\begin{matrix}1 & {e}^{jθ} & ⋯ & {e}^{j \left(M-1\right) θ}\end{matrix}\right]}^{T} & - {e}^{jϕ} {\left[\begin{matrix}1 & {e}^{jθ} & ⋯ & {e}^{j \left(M-1\right) θ}\end{matrix}\right]}^{T} \\ ⋯ & ⋯ \\ {e}^{j \left(N-1\right) ϕ} {\left[\begin{matrix}1 & {e}^{jθ} & ⋯ & {e}^{j \left(M-1\right) θ}\end{matrix}\right]}^{T} & - {e}^{j \left(N-1\right) ϕ} {\left[\begin{matrix}1 & {e}^{jθ} & ⋯ & {e}^{j \left(M-1\right) θ}\end{matrix}\right]}^{T}\end{matrix}\right]\end{matrix}\right]$ or ${\left(4NM\right)}^{- \frac{1}{2}} \left[\begin{matrix}\left[\begin{matrix}{\left[\begin{matrix}1 & {e}^{jθ} & ⋯ & {e}^{j \left(M-1\right) θ}\end{matrix}\right]}^{T} & {\left[\begin{matrix}1 & {e}^{jθ} & ⋯ & {e}^{j \left(M-1\right) θ}\end{matrix}\right]}^{T} \\ {e}^{jϕ} {\left[\begin{matrix}1 & {e}^{jθ} & ⋯ & {e}^{j \left(M-1\right) θ}\end{matrix}\right]}^{T} & {e}^{jϕ} {\left[\begin{matrix}1 & {e}^{jθ} & ⋯ & {e}^{j \left(M-1\right) θ}\end{matrix}\right]}^{T} \\ ⋯ & ⋯ \\ {e}^{j \left(N-1\right) ϕ} {\left[\begin{matrix}1 & {e}^{jθ} & ⋯ & {e}^{j \left(M-1\right) θ}\end{matrix}\right]}^{T} & {e}^{j \left(N-1\right) ϕ} {\left[\begin{matrix}1 & {e}^{jθ} & ⋯ & {e}^{j \left(M-1\right) θ}\end{matrix}\right]}^{T}\end{matrix}\right] \\ \left[\begin{matrix}j {\left[\begin{matrix}1 & {e}^{jθ} & ⋯ & {e}^{j \left(M-1\right) θ}\end{matrix}\right]}^{T} & - j {\left[\begin{matrix}1 & {e}^{jθ} & ⋯ & {e}^{j \left(M-1\right) θ}\end{matrix}\right]}^{T} \\ {je}^{jϕ} {\left[\begin{matrix}1 & {e}^{jθ} & ⋯ & {e}^{j \left(M-1\right) θ}\end{matrix}\right]}^{T} & - {je}^{jϕ} {\left[\begin{matrix}1 & {e}^{jθ} & ⋯ & {e}^{j \left(M-1\right) θ}\end{matrix}\right]}^{T} \\ ⋯ & ⋯ \\ {je}^{j \left(N-1\right) ϕ} {\left[\begin{matrix}1 & {e}^{jθ} & ⋯ & {e}^{j \left(M-1\right) θ}\end{matrix}\right]}^{T} & - {je}^{j \left(N-1\right) ϕ} {\left[\begin{matrix}1 & {e}^{jθ} & ⋯ & {e}^{j \left(M-1\right) θ}\end{matrix}\right]}^{T}\end{matrix}\right]\end{matrix}\right]$ where $θ = \frac{π}{16} \left(2{i}_{1}+⌊ {i}_{2} / 4 ⌋\right) ,$ *i*₁ = 0,...,15, *i*₂ = 0,...,15, and a symbol "└*x*┘" represents a maximum integer that is not greater than x. $ϕ = \frac{kπ}{32} ,$ *k* = 0,...,15,...,32, and so on, or *k* = 0,±1,...,±15,±16, and so on.

***M*** is a positive integer; for example, a value of ***M*** may be 1, 2, 4, 6, 8, 16, 32, 64, and so on. *N* is a positive integer; for example, a value of *N* may be 1, 2, 4, 6, 8, 16, 32, 64, and so on.

It can be known from studying the precoding matrix **W** , the precoding matrix **W** may match an actually deployed antenna configuration; because granularity of a value of *θ* is *π*/16, more precise space quantization can be implemented, and feedback precision of CSI can be improved; besides, two columns of the precoding matrix **W** are orthogonal to each other, and interference between layers can be reduced.

The embodiments of the present invention are described below in more detail with reference to specific examples. In embodiments described below, an eNB is used as an example of a base station, and UE is used as an example of user equipment, but the embodiments of the present invention are not limited thereto, and may also be applied to other communications systems.

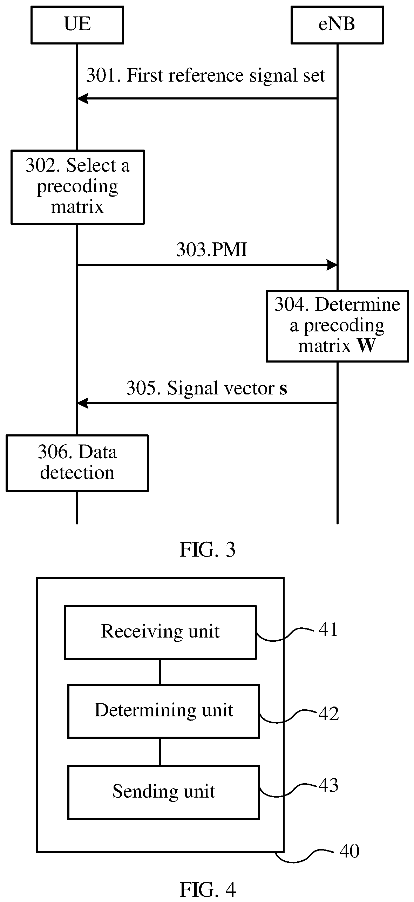

FIG. 3 is a schematic flowchart of a multi-antenna transmission method according to an embodiment of the present invention.

301: UE receives a first reference signal set, where the first reference signal set is associated with a user equipment-specific (UE-specific) matrix or matrix set.

Specifically, the first reference signal set received by the UE is notified by an eNB by using higher layer signaling, or is dynamically notified by an eNB by using a downlink control channel. The reference signal may be a cell specific reference signal (CRS, Cell specific RS), or a demodulation reference signal (DMRS, DeModulation RS), or a channel state information reference signal (CSI-RS, channel state information RS). The reference signal may correspond to a physical antenna, or may also correspond to a virtual antenna, where the virtual antenna is a weighted combination of multiple physical antennas.

The first reference signal set may include one or more reference signal subsets.

Specifically, for example, the first reference signal set received by the UE is P, which includes in total eight reference signals, namely, p1, p2, p3, ..., p7, and p8. The first reference signal set may include one reference signal subset. In this case, the reference signal subset is the same as the first reference signal set, that is, the eight reference signals p1, p2, ..., and s8 in P.

Alternatively, the first reference signal set may include multiple reference signal subsets. For example, the first reference signal set is P, and includes two reference signal subsets P1 and P2, where P1 = {p1, p2, p3, p4}, and P2 = {s5,s6,s7, s8}.

Further, the reference signal subset included in the first reference signal set may correspond to a co-polarized antenna port subset. For example, the subset P1 = {p1, p2, p3, p4} of the first reference signal set corresponds to a co-polarized antenna port subset; and the subset P1 = {p5, p 6, p7, p8} of the first reference signal set corresponds to another co-polarized antenna port subset.

Optionally, as another embodiment, the reference signal subset included in the first reference signal set may correspond to a port subset that is arranged in a same direction in an antenna port array. For example, the subset P1 = {p1, p2, p3, p4} of the first reference signal set corresponds to an antenna port subset of a column in a vertical direction in the antenna port array. The subset P2 = {p5, p 6, p7, p8} of the first reference signal set corresponds to an antenna port subset of a row in a horizontal direction in the antenna port array. Alternatively, P1 = {p1, p2, p3, p4} and P2 = {p5, p 6, p7, p8} correspond to antenna port subsets of two different rows in the antenna port array separately. Alternatively, P1 = {p1, p2, p3, p4} and P2 = {p5, p 6, p7, p8} correspond to antenna port subsets of two different columns in the antenna port array separately.

Optionally, as another embodiment, the reference signal subset included in the first reference signal set may correspond to a quasi-co-location antenna port subset. For example, the subset P1 = {p1, p2, p3, p4} of the first reference signal set corresponds to a quasi-co-location antenna port subset. The subset P1 = {p5, p 6, p7, p8} of the first reference signal set corresponds to an antenna port subset that is located at another quasi-co-location. It should be noted that the quasi-co-location (QCL, Quasi-Co-Location) antenna port refers to that a distance between antennas corresponding to the antenna port is within a range that uses a wavelength as a dimension.

It should be noted that each of the foregoing antenna ports corresponds to a physical antenna or virtual antenna, where the virtual antenna is a weighted combination of multiple physical antennas or antenna array elements.

Further, reference signals in the multiple reference signal subsets included in the first reference signal set may occupy different symbol/frequency/sequence resources and be transmitted at a same subframe, or may occupy a same symbol/frequency/sequence resource and be transmitted at different subframes.

The foregoing division of the reference signal subset may further reduce complexity of implementation.

Specifically, the first reference signal set is associated with a subset of a user equipment-specific (UE-specific) matrix or matrix set; or each reference signal in the first reference signal set may be associated with a subset of a user equipment-specific (UE-specific) matrix or matrix set. For example, the reference signal set notified by the eNB is S, which includes in total eight reference signals, namely s1, s2, s3, ..., s7, and s8. The foregoing reference signals are associated with matrices w1, w2, ..., and w8 separately, or are associated with {w1,w2}, {w2,w3}, ..., {w7,w8}, and {w8,w1} separately.

The first reference signal set is associated with a subset of a matrix or matrix set, or a reference signal subset of the first reference signal set may be associated with a subset of a user equipment-specific matrix or matrix set. For example, the reference signal set notified by the eNB is S, which includes in total eight reference signals, namely s1, s2, s3, ..., s7, and s8. A reference signal subset {s1, s2, s3, s4} is associated with a matrix p1 or a matrix subset {p1, ..., pm}, and a reference signal subset {s5, s6, s7, s8} is associated with a matrix w1 or a matrix subset {w1, ..., wn}, where m and n are positive integers. Alternatively, reference signal subsets {s1, s2}, {s3, s4}, ..., and {s7, s8} are associated with matrices w1, w2, w3, and w4 respectively. Alternatively, reference signal subsets {s1, s2}, {s3, s4}, ..., and {s7, s8} are associated with matrices {w1, w2}, {w3, w4}, ..., and {w7, w8} respectively. The matrix herein includes a vector.

Further, an association or a correspondence between the first reference signal set and a user equipment-specific matrix or matrix set may be notified by using signaling. For example, it is notified by using higher layer signaling, for example, radio resource control (RRC, Radio Resource Control) signaling, that the reference signal subset {s1, s2, s3, s4} is associated with a matrix p1 or a matrix subset {p1, ..., pm}, and the reference signal subset {s5, s6, s7, s8} is associated with a matrix w1 or a matrix subset {w1, ..., wn}. Alternatively, the association or correspondence between the first reference signal set and a user equipment-specific matrix or matrix set is dynamically notified by using downlink control information (DCI, Downlink Control information). Alternatively, multiple candidate association relationships are notified by using higher layer signaling, for example RRC signaling, and one of the candidate association relationships is further dynamically notified by using DCI. Specifically, each matrix subset in the signaling may be represented by a bitmap (bitmap). The RRC signaling may be UE-specific signaling, for example, dedicated physical signaling. Besides, the first reference signal set and indication information of the UE-specific matrix or matrix set may be sent in same RRC dedicated signaling.

Optionally, as another embodiment, an association relationship or mapping between the first reference signal set and a user equipment-specific matrix or matrix set may also be predefined. For example, it is predefined and known by both the user equipment and the base station that the reference signal subset {s1, s2, s3, s4} is associated with a matrix p1 or a matrix subset {p1, ..., pm}, and the reference signal subset {s5, s6, s7, s8} is associated with a matrix w1 or a matrix subset {w1, ..., wn}.

Specifically, the first reference signal set is associated with a subset of a matrix or matrix set, or the first reference signal set may be associated with a matrix or matrix set, where a subset of the matrix or matrix set is notified by using signaling or is predefined. For example, a matrix or matrix subset is notified by using higher layer signaling, for example, RRC signaling, or is dynamically notified by using DCI; or, a matrix set is notified by using higher layer signaling, for example, RRC signaling, and one matrix subset in the matrix set is further dynamically notified by using DCI.

Specifically, a matrix **A** in a subset of the matrix or matrix set that is associated with the first reference signal set may be a matrix formed by columns being DFT vectors, that is, $A = \left[\begin{matrix}{a}_{0} & {a}_{1} & ⋯ & {a}_{{N}_{a} - 1}\end{matrix}\right] ,$ (7) where, ${a}_{k} ∈ \left\{{f}_{0},{f}_{1},…,{f}_{{N}_{f} - 1}\right\} , k = 0 , … , {N}_{a} - 1$ (8) where Nₐ≥1 is a quantity of columns of the matrix **A**, and N_{f} ≥ 1 is a quantity of columns of the DFT vectors; **f**ₙ,n = 0,...,N_{f}-1 is the DFT vectors, that is, **f**ₙ is represented as: ${f}_{n} = {\left[\begin{matrix}{e}^{j \frac{2 π ⋅ 0 ⋅ n}{N}} & {e}^{j \frac{2 π ⋅ 1 ⋅ n}{N}} & ⋯ & {e}^{j \frac{2 π ⋅ \left(M-1\right) ⋅ n}{N}}\end{matrix}\right]}^{T}$ (9) where both M and N are integers; for example, for M=N=4, there is: $\left[\begin{matrix}{f}_{0} & {f}_{1} & {f}_{2} & {f}_{3}\end{matrix}\right] = \frac{1}{2} \left[\begin{matrix}1 & 1 & 1 & 1 \\ 1 & j & - 1 & - j \\ 1 & - 1 & 1 & - 1 \\ 1 & - j & - 1 & j\end{matrix}\right]$ (10)

Specifically, a matrix **A** in the user equipment-specific (UE specific) matrix or matrix set may also be a matrix formed by column vectors of a Hadamard matrix, that is $A = \left[\begin{matrix}{a}_{0} & {a}_{1} & ⋯ & {a}_{{N}_{a} - 1}\end{matrix}\right] ,$ (11) where, ${a}_{k} ∈ \left\{{h}_{0},{h}_{1},…,{h}_{{N}_{h} - 1}\right\} , k = 0 , … , {N}_{a} - 1$ (12) where Nₐ ≥ 1 is a quantity of columns of the matrix **A**, Nₕ ≥ 1 is a quantity of columns of the Hadamard matrix, and **h**ₘ,m = 0,...,Nₕ-1 is column vectors of the Hadamard matrix, for example, $\left[\begin{matrix}{h}_{0} & {h}_{1} & {h}_{2} & {h}_{3}\end{matrix}\right] = \frac{1}{2} \left[\begin{matrix}1 & 1 & 1 & 1 \\ 1 & 1 & - 1 & - 1 \\ 1 & - 1 & 1 & - 1 \\ 1 & - 1 & - 1 & 1\end{matrix}\right]$ (13)

Further, the user equipment-specific (UE specific) matrix set may include at least two matrices, where one matrix is the matrix **A** described above, and the other matrix is a matrix **B** formed by columns being DFT vectors, or by column vectors of a Hadamard matrix, that is, $B = \left[\begin{matrix}{b}_{0} & {b}_{1} & ⋯ & {b}_{{N}_{b} - 1}\end{matrix}\right] ,$ (14) where, ${b}_{k} ∈ \left\{{f}_{0}^{′},{f}_{1}^{′},…,{f}_{{N}_{f}^{′} - 1}^{′}\right\} , k = 0 , … , {N}_{b} - 1$ (15) or ${b}_{k} ∈ \left\{{h}_{0}^{′},{h}_{1}^{′},…,{h}_{{N}_{h}^{′} - 1}^{′}\right\} , k = 0 , … , {N}_{b} - 1$ (16) where N_{b} ≥ 1 is a quantity of columns of the matrix **B**, ${N}_{h}^{′} \geq 1$ and ${N}_{f}^{′} \geq 1$ are a quantity of columns of the Hadamard matrix and a quantity of columns of the DFT vectors respectively; ${h}_{m}^{′}$ is a column vector of the Hadamard matrix; ${f}_{n}^{′}$ is the DFT vectors, that is, ${f}_{n}^{′}$ is represented as: ${f}_{n}^{′} = {\left[\begin{matrix}{e}^{j \frac{2 π ⋅ 0 ⋅ n}{N ′}} & {e}^{j \frac{2 π ⋅ 1 ⋅ n}{N ′}} & ⋯ & {e}^{j \frac{2 π ⋅ \left(M′-1\right) ⋅ n}{N ′}}\end{matrix}\right]}^{T}$ (17) where M',N' are both integers; in this case, the first reference signal set may be divided into two subsets, which are separately associated with the matrix **A** and the matrix **B** or a subset formed by the matrix A and a subset formed by the matrix **B**.

Alternatively, one matrix in the user equipment-specific (UE specific) matrix or the matrix set may also be a matrix **Y** in the following form: $Y = A ⊗ B$ (18) where **A** and **B** may have the foregoing structures shown in the expressions (8) to (13) and the expressions (14) to (17) respectively.

Besides, the matrix in the user equipment-specific (UE specific) matrix or the matrix set may also use a matrix in another form, for example, a Householder matrix, or a precoding matrix in an LTE R8 4-antenna or LTE R10 8-antenna codebook.

One matrix in the user equipment-specific (UE specific) matrix or the matrix set may have the following structure: $W = {W}_{1} {W}_{2}$ (19) where a matrix **W**₁ is a block diagonal matrix, for example, ${W}_{1} = diag \left\{{X}_{1}, {X}_{2}\right\}$ (20) where each block matrix in the matrix **W**₁ is a function of the matrices **A** and **B** or a function of a matrix **Y**, for example, ${X}_{i} = diag \left\{{ρ}_{0},{ρ}_{1},…,\right\} A ⊗ B , i = 1,2 ,$ (21) or ${X}_{i} = diag \left\{{ρ}_{0},{ρ}_{1},…,\right\} Y , i = 1,2 ,$ (22) where *ρ*₀, *ρ*₁,..., are scalars; for example, *ρ*₀ = *ρ*₁ =,...,=1.

Optionally, as another embodiment, each block matrix in the matrix **W**₁ may be represented as a kronecker product of two matrices, for example, ${X}_{i} = {C}_{i} ⊗ {D}_{i} , i = 1,2 ,$ (23) where ⊗ represents a matrix kronecker product, and a matrix **C***ᵢ* or **D***ᵢ* satisfies the following relationship:
A k^{th} column **c***ₗ* of the matrix **C***ᵢ* satisfies: ${c}_{k} = diag \left\{1, {e}^{j 2 π / {N}_{C}}, ⋯, {e}^{j 2 {πN}_{V} / {N}_{C}}\right\} {a}_{m}$ (24) or ${c}_{k} = diag \left\{1,{e}^{j 2 π / {N}_{C}},⋯,{e}^{j 2 π \left({N}_{V}/2-1\right) / {N}_{C}},{e}^{{jθ}_{Δ}},{e}^{{jθ}_{Δ}}{e}^{j 2 π / {N}_{C}},⋯,{e}^{{jθ}_{Δ}}{e}^{j 2 π \left({N}_{V}/2-1\right) / {N}_{C}}\right\} {a}_{m}$ (25) or; an l^{th} column **d***ₗ* of **D***ᵢ* satisfies: ${d}_{l} = diag \left\{1, {e}^{j 2 π / {N}_{D}}, ⋯, {e}^{j 2 {πN}_{H} / {N}_{D}}\right\} {b}_{n}$ (26) or ${d}_{l} = diag \left\{1,{e}^{j 2 π / {N}_{D}},⋯,{e}^{j 2 π \left({N}_{H}/2-1\right) / {N}_{D}},{e}^{{jϕ}_{Δ}},{e}^{{jϕ}_{Δ}}{e}^{j 2 π / {N}_{D}},⋯,{e}^{{jϕ}_{Δ}}{e}^{j 2 π \left({N}_{H}/2-1\right) / {N}_{D}}\right\} {b}_{n}$ (27) where *N_{V}, N_{H}, N_{C},* and *N_{D}* arc all positive integers, vectors **a***ₗ* and **b***ₗ* arc columns of the matrix **A** and the matrix **B** respectively, and *θ*_{△} and φ_{△} are phase shifts whose values may be 0,*π*,±*π*/2,±*π*/4,±*π*/8, and so on.

It should be noted that a value of *N_{C}* or *N_{D}* may be infinite, and therefore 2*π*/*N*_{C} = 0 or 2*π*/*N*_{D} = 0, and in this case, **c***ₖ* = **a***ₘ*, **c***ₖ* = *diag*{1,1,···,1,*e^{jθ_{△}},e^{jθ_{△}}*,···*,e^{jθ_{△}}*}**a***ₘ*, **d***ₗ* = **a***ₘ*, or **d***ₗ* = *diag*{1,1,···,1,*e^{jφ_{△}}*,*e^{jφ_{△}}*,···,*e^{jφ_{△}}*}**a***ₘ*.

Further, vectors **c***ₖ* and **d***ₖ* in the expressions (24) to (27) may have granularity finer than that of **a***ₗ* and **b***ₗ* respectively, that is, ${N}_{C} \geq N or {N}_{D} \geq N ′$ (28)

Further, a set formed by the foregoing vector or matrix **A** or **B** or **Y** or **W** is **C_{A}** or **C_{B}** or **C_{Y}** or **C_{W}**, and may be further divided into multiple subsets (the subset may include only one element), and each subset may be associated with or have a mapping relationship with a user equipment identifier. For example, a subset ${C}_{A}^{\left(1\right)}$ in **C_{A}** is associated with or is mapped to a user equipment identifier ID₁, and another subset ${C}_{A}^{\left(2\right)}$ in **C_{A}** is associated with or is mapped to a user equipment identifier ID₂. The subsets ${C}_{A}^{\left(1\right)}$ and ${C}_{A}^{\left(2\right)}$ may intersect, or may not intersect. An association or a mapping relationship between the foregoing vector or matrix or subset of the matrix with the user equipment identifier may be predefined, or may also be notified by the eNB to the UE, for example, notified by using higher layer signaling, for example, RRC signaling or a downlink control channel. Each subset may include only one element. Alternatively, the reference signal set may be associated with a user equipment identifier. For example, the reference signal set notified by the eNB is S, which includes in total eight reference signals, namely s1, s2, s3, ..., s7, and s8. The foregoing reference signal is associated with a user equipment identifier ID₀; or the reference signal set received by the UE may be divided into two or more subsets, and the subsets are associated with specific user equipment identifiers separately. For example, the reference signal set received by the UE may be divided into two subsets, one including reference signals s1, s2, s3, and s4 and the other s5, s6, s7, and s8, and then s1, s2, s3, and s4 are associated with identifiers user equipment ID₁ and ID₂. An association or a mapping relationship between the reference signal set and a user equipment identifier may be predefined, or may also be notified by the eNB.

It should be noted that the user equipment identifier is not necessarily a UE ID in a specific communications protocol, for example, LTE, but may also be a specific parameter that is used to distinguish a user equipment attribute, for example, an index or an offset in a user group or a UE group, or simply an index or an offset used in a same user group or UE group. The offset or index facilitates implementation of distinguishing of attributes related to different beams among user equipments or user groups.

Further, reference signals in the reference signal set may be sent at different times, for example, different subframes, and the different times may be associated with or mapped to different vectors/matrices or different subsets of matrix sets. The different vectors/matrices or different subsets of matrix sets that the reference signals are associated with or mapped to at different times may be predefined, or may also be notified by the eNB, for example, notified by using RRC signaling.

302: The UE selects a precoding matrix based on the first reference signal set, where the precoding matrix is a function of the user equipment-specific matrix or matrix set.

Specifically, that the precoding matrix is a function of the user equipment-specific matrix or matrix set includes that:
the precoding matrix is a product of two matrices **W**₁ and **W**₂, that is, $W = {W}_{1} {W}_{2}$ (29) where the matrix **W**₁ is a function of a matrix **A** or **B**, and the matrix **A** or **B** is a matrix in the user equipment-specific matrix or matrix set; for example, **W**₁ is the matrix **A** or the matrix **B** ;
or,
the matrix **W**₁ is a block diagonal matrix, the block diagonal matrix includes at least one block matrix, and each block matrix is a function of the matrix **A** or **B**, for example, ${W}_{1} = diag \left\{{X}_{1}, {X}_{2}\right\}$ (30) where each block matrix in the matrix **W**₁ is a function of the matrix **A** or the matrix **B** , for example, ${X}_{i} = A , i = 1,2$ (31) or, ${X}_{i} = diag \left\{{ρ}_{0},{ρ}_{1},…,\right\} A , i = 1,2$ (32) where *ρ*₀,*ρ*₁,... are scalars, or may also be nonnegative real numbers, or may also be complex numbers, or, ${X}_{i} = {C}_{i} ⊗ {D}_{i} , i = 1,2$ (33) where ⊗ represents a kronecker product of two matrices, where a k^{th} column **c***ₗ* of the matrix **C***ᵢ* or an l^{th} column **d***ₗ* of **D***ᵢ* satisfies the following relationship: ${c}_{k} = diag \left\{1, {e}^{j 2 π / {N}_{C}}, ⋯, {e}^{j 2 {πN}_{V} / {N}_{C}}\right\} {a}_{m}$ (34) or, ${c}_{k} = diag \left\{1,{e}^{j 2 π / {N}_{C}},⋯,{e}^{j 2 π \left({N}_{V}/2-1\right) / {N}_{C}},{e}^{{jθ}_{Δ}},{e}^{{jθ}_{Δ}}{e}^{j 2 π / {N}_{C}},⋯,{e}^{{jθ}_{Δ}}{e}^{j 2 π \left({N}_{V}/2-1\right) / {N}_{C}}\right\} {a}_{m}$ (35) or, ${d}_{l} = diag \left\{1, {e}^{j 2 π / {N}_{D}}, ⋯, {e}^{j 2 {πN}_{H} / {N}_{D}}\right\} {b}_{n}$ (36) or, ${d}_{l} = diag \left\{1,{e}^{j 2 π / {N}_{D}},⋯,{e}^{j 2 π \left({N}_{H}/2-1\right) / {N}_{D}},{e}^{{jϕ}_{Δ}},{e}^{{jϕ}_{Δ}}{e}^{j 2 π / {N}_{D}},⋯,{e}^{{jϕ}_{Δ}}{e}^{j 2 π \left({N}_{H}/2-1\right) / {N}_{D}}\right\} {b}_{n}$ (37) where *N_{V}, N_{H}, Nc,* and *N_{D}* are all positive integers, a vector **a***ₘ* and a vector **b***ₙ* are an m^{th} column vector of the matrix **A** and an n^{th} column vector of the matrix **B** respectively, *θ*_{△} and *φ*_{△} are phase shifts whose values may be 0,*π*,±*π*/2,±*π*/4,±±*π*/8, and so on.

It should be noted that a value of *N_{C}* or *N_{D}* may be infinite, and therefore 2*π*/*N*_{C} = 0 or 2*π*/*N*_{D} = 0, and in this case, **c***ₖ* = **a***ₘ*, **c***ₖ* = *diag*{1,1,···,1,*e^{jθ_{△}},e^{jθ_{△}}*,···*,e^{jθ_{△}}*}**a***ₘ*, **d***ₗ* = **b***ₙ*, or **d***ₗ* = *diag*{1,1,···,1,*e^{jφ_{△}}*,*e^{jφ_{△}}*,...,*e^{jφ_{△}}*}**b***ₙ*.

At least one of the matrix **A** or the matrix **B** is a matrix in the user equipment-specific matrix or matrix set.

In this case, a column vector in the matrix **W**₂ may have a structure ${y}_{n} = {\left[\begin{matrix}{e}_{n}^{T} & {e}^{{jθ}_{n}} {e}_{n}^{T}\end{matrix}\right]}^{T} ,$ where **e***ₙ* represents a selection vector, in which except that an n^{th} element is 1, the rest elements are all 0, and *θₙ* is a phase shift. In an example, the block matrices **X**₁ and **X**₂ each have 4 columns, and the matrix **W**₂ may be represented as: ${W}_{2} ∈ \left\{\frac{1}{\sqrt{2}}\left[\begin{matrix}Y \\ Y\end{matrix}\right],\frac{1}{\sqrt{2}}\left[\begin{matrix}Y \\ j Y\end{matrix}\right],\frac{1}{\sqrt{2}}\left[\begin{matrix}Y \\ - Y\end{matrix}\right],\frac{1}{\sqrt{2}}\left[\begin{matrix}Y \\ - j Y\end{matrix}\right]\right\}$ (38) $Y ∈ \left\{{{e}^{˜}}_{1}, {{e}^{˜}}_{2}, {{e}^{˜}}_{3}, {{e}^{˜}}_{4}\right\}$ (39) or, ${W}_{2} ∈ \left\{\frac{1}{\sqrt{2}}\left[\begin{matrix}{Y}_{1} & {Y}_{2} \\ {Y}_{1} & - {Y}_{2}\end{matrix}\right],\frac{1}{\sqrt{2}}\left[\begin{matrix}{Y}_{1} & {Y}_{2} \\ j {Y}_{1} & - j {Y}_{2}\end{matrix}\right]\right\}$ (40) $\left({Y}_{1}, {Y}_{2}\right) ∈ \left\{\left({{e}^{˜}}_{1}, {{e}^{˜}}_{1}\right), \left({{e}^{˜}}_{2}, {{e}^{˜}}_{2}\right), \left({{e}^{˜}}_{3}, {{e}^{˜}}_{3}\right), \left({{e}^{˜}}_{4}, {{e}^{˜}}_{4}\right), \left({{e}^{˜}}_{1}, {{e}^{˜}}_{2}\right), \left({{e}^{˜}}_{2}, {{e}^{˜}}_{3}\right), \left({{e}^{˜}}_{1}, {{e}^{˜}}_{4}\right), \left({{e}^{˜}}_{2}, {{e}^{˜}}_{4}\right)\right\}$ (41) where **ẽ***ₙ,n*= 1, 2,3,4 represents a selection vector of 4x1, in which except that an n^{th} element of the vector is 1, the rest elements of the vector are all 0.

In an example, the block matrices **X**₁ and **X**₂ each have 8 columns, and the matrix **W**₂ may be represented as: ${W}_{2} ∈ \left\{\frac{1}{\sqrt{2}}\left[\begin{matrix}Y \\ Y\end{matrix}\right],\frac{1}{\sqrt{2}}\left[\begin{matrix}Y \\ j Y\end{matrix}\right],\frac{1}{\sqrt{2}}\left[\begin{matrix}Y \\ - Y\end{matrix}\right],\frac{1}{\sqrt{2}}\left[\begin{matrix}Y \\ - j Y\end{matrix}\right]\right\}$ (42) $Y ∈ \left\{{e}_{1}, {e}_{2}, {e}_{3}, {e}_{4}, {e}_{5}, {e}_{6}, {e}_{7}, {e}_{8}\right\}$ (43) or, ${W}_{2} ∈ \left\{\frac{1}{\sqrt{2}}\left[\begin{matrix}{Y}_{1} & {Y}_{2} \\ {Y}_{1} & - {Y}_{2}\end{matrix}\right],\frac{1}{\sqrt{2}}\left[\begin{matrix}{Y}_{1} & {Y}_{2} \\ j {Y}_{1} & - j {Y}_{2}\end{matrix}\right]\right\}$ (44) $\left({Y}_{1}, {Y}_{2}\right) ∈ \left\{\left({e}_{1}, {e}_{1}\right), \left({e}_{2}, {e}_{2}\right), \left({e}_{3}, {e}_{3}\right), \left({e}_{4}, {e}_{4}\right), \left({e}_{1}, {e}_{2}\right), \left({e}_{2}, {e}_{3}\right), \left({e}_{1}, {e}_{4}\right), \left({e}_{2}, {e}_{4}\right)\right\}$ (45) where **e***ₙ*,*n* = 1,2,···,8 represents a selection vector of 8x1, in which except that an n^{th} element of the vector is 1, the rest elements of the vector are all 0.

Alternatively,
The block diagonal matrix **W**₁ includes only one block matrix, that is, **W**₁ = **X**, and the block matrix **X** is a function of the matrix **A** or **B**. For example,
the block matrix **X** is a kronecker product of two matrices **A** and **B**, that is, $X = A ⊗ B$ (46) where the matrix **A** or the matrix **B** is a matrix in the user equipment-specific (UE-specific) matrix or matrix set;
or,
the block matrix **X** is a Kronecker (kronecker) product of two matrices **C** and **D, X** = **C**⊗**D**. At least one matrix in the two matrices **C** and **D** is a function of the matrix **A** or **B** . For example,

Columns of at least one matrix in the matrices **C** and **D** are rotations of column vectors in the matrix **A** or **B**, that is, a k^{th} column vector **c***ₖ* of the matrix **C** is: ${c}_{k} = diag \left\{1, {e}^{j 2 π / {N}_{C}}, ⋯, {e}^{j 2 {πN}_{V} / {N}_{C}}\right\} {a}_{m} ,$ (47) or, ${c}_{k} = diag \left\{1,{e}^{j 2 π / {N}_{C}},⋯,{e}^{j 2 π \left({N}_{V}/2-1\right) / {N}_{C}},{e}^{{jθ}_{△}},{e}^{{jθ}_{△}}{e}^{j 2 π / {N}_{C}},⋯,{e}^{{jθ}_{△}}{e}^{j 2 π \left({N}_{V}/2-1\right) / {N}_{C}}\right\} {a}_{m} ,$ (48) or; an l^{th} column vector **d***ₗ* of the matrix **D** is: ${d}_{l} = diag \left\{1, {e}^{j 2 π / {N}_{D}}, ⋯, {e}^{j 2 {πN}_{H} / {N}_{D}}\right\} {b}_{n} ,$ (49) or, ${d}_{l} = diag \left\{1,{e}^{j 2 π / {N}_{D}},⋯,{e}^{j 2 π \left({N}_{H}/2-1\right) / {N}_{D}},{e}^{{jϕ}_{△}},{e}^{{jϕ}_{△}}{e}^{j 2 π / {N}_{D}},⋯,{e}^{{jϕ}_{△}}{e}^{j 2 π \left({N}_{H}/2-1\right) / {N}_{D}}\right\} {b}_{n} ,$ (50) where *N_{V}, N_{H}, Nc,* and *N_{D}* are all positive integers, a vector **a***ₘ* and a vector **b***ₙ* are an m^{th} column vector of the matrix **A** and an n^{th} column vector of the matrix **B** respectively, and *θ*_{△} and *φ*_{△} are phase shifts whose values may be 0,*π*,±*π*/2,±*π*/4,±*π*/8, and so on.

It should be noted that a value of *N_{C}* or *N_{D}* may be infinite, and therefore 2*π*/*N*_{C} = 0 or 2*π*/*N*_{D}=0, and in this case, **c***ₖ* = **a***ₘ*, **c***ₖ* = *diag*{1,1,···,1,*e^{jθ_{△}},e^{jθ_{△}}*,···*,e^{jθ_{△}}*}**a***ₘ*, **d***ₗ* = **b***ₙ*, or **d***ₗ* = *diag* {1,1,···1,*e^{jθ_{△}}*,*e^{jθ_{△}}*,···,*e^{jθ_{△}}*}**b***ₙ*.

Optionally, in this case, the matrix **W**₂ is a column selection matrix, and is used to select r columns from **X** = **C**⊗**D,** where r is a rank of a precoding matrix. For example, **W**₂ may be used to always select first r columns in **X** = **C**⊗**D,** then ${W}_{2} = \left[\begin{matrix}{e}_{1} & {e}_{2} & ⋯ & {e}_{r}\end{matrix}\right]$ (51) where **e***ᵢ* represents a unit column vector, in which except that an i^{th} element is 1, the rest elements are all 0.

Further, vectors **c***ₖ* and **d***ₖ* in the expressions (47) to (50) may have granularity finer than that of **a***ₗ* and **b***ₗ*, that is, ${N}_{D} \geq N or {N}_{D} \geq N$ (52)

303: The UE sends a precoding matrix indicator PMI to the base station, where the PMI corresponds to the selected precoding matrix.

The precoding matrix indicator PMI may include one or more indexes.

Specifically, the precoding matrix indicator PMI may include one index. In this case, the index indicates directly the precoding matrix **W**. For example, there are in total 16 different precoding matrices, and then an index value n = 0, ..., 15 may be used to indicate the precoding matrix **W** having a mark number of 0, 1, ... 15 respectively.

Alternatively, the precoding matrix indicator PMI may also be two indexes, for example, i₁ and i₂. **W**₁ and **W**₂ in the expression (29) are indicated by using i₁ and i₂ respectively, so that i₁ and i₂ indicate the precoding matrix **W**.

Further, the index i₁ may be reported based on a subset of **W**₁. For example, a universal set of **W**₁ is Q, and subsets of the set Q are Q₀, ..., and Q_{.3} separately. In this case, the index i₁ is used to indicate a matrix **W**₁ in a subset Qₖ, where Qₖ may be one subset in Q₀, Q₁..., and Q₃. Qk may be predefined, or may be determined and reported by the UE, or may also be notified by the eNB to the UE. The subsets Q0, ..., and Q3 may not intersect with each other, that is, an intersection set of the subsets is an empty set; or the subsets Q0, ..., and Q3 may intersect with each other, that is, an intersection set of the subsets is not an empty set.

Alternatively, there may also be three indexes reported by the UE and used to indicate the precoding matrix, for example, i₃, i₄, and i₅. **X**₁ and **X**₂ in the expression (30) are implicitly indicated by using i₃ and i₄ respectively, and **W**₂ is implicitly indicated by using is. Therefore, i₃, i₄, and is indicate the precoding matrix **W** .

Further, the index i₃ may be reported based on a subset of **X**₁. For example, a universal set of **X**₁ is R, and subsets of the set R are R₀, ..., and R₇ separately. In this case, the index i₃ is used to indicate a matrix **X**₁ in a subset Rₖ. Rₖ may be one subset in R₀, R₁..., and R₇. Rₖ may be predefined, or may be determined and reported by the UE, or may also be notified by the eNB to the UE. The subsets R₀, ..., and R₇ may not intersect with each other, that is, an intersection set of the subsets is an empty set; or the subsets R₀, ..., and R₇ may intersect with each other, that is, an intersection set of the subsets is not an empty set; similarly, i₄ and i₅ may be reported based on subsets of **X**₂ and **W**₂ respectively. The subsets of **X**₂ and **W**₂ may be predefined, or may be determined and reported by the UE, or may also be notified by the eNB to the UE.

Alternatively, indexes reported by the UE and used to indicate the precoding matrix may also be other three indexes, for example, i6, i7 and i8. **C***ᵢ* and **D***ᵢ* in the expression (33) are implicitly indicated by using i6 and i7 respectively, and **W**₂ is implicitly indicated by using i8. Therefore, i6, i7, and i8 indicate the precoding matrix **W**, and in this case, **C**₁ = **C**₂ and **D**₁ = **D**₂.

Further, the index i₆ may be reported based on a subset of **C***ᵢ*. For example, a universal set of **C***ᵢ* is O, and subsets of the set O are O₀, ..., and O₇ separately. In this case, the index i₆ is used to indicate a matrix **C***ᵢ* in a subset Ok. Ok may be one subset in O₀, O₁..., and O₇. Oₖ may be predefined, or may also be determined and reported by the UE, or may also be notified by the eNB to the UE. The subsets O₀, ..., and O₇ may not intersect with each other, that is, an intersection set of the subsets is an empty set; or the subsets O₀, ..., O₇ may intersect with each other, that is, an intersection set of the subsets is not an empty set; similarly, i₇ and i₈ may be reported based on subsets of **D***ᵢ* and W₂ respectively. The subsets of **D***ᵢ* and W₂ may be predefined, or may be determined and reported by the UE, or may also be notified by the eNB to the UE.

Specifically, indexes reported by the UE and used to indicate the precoding matrix may also be four indexes, for example, i₉, i₁₀, i₁₁, and i₁₂. **C**₁ and **C**₂ in the expression (33) are implicitly indicated by using i₉ and i₁₀ respectively, and **D**₁ = **D**₂ and **W**₂ are indicated by using i₁₁ and i₁₂ respectively. Therefore, i₉, i₁₀, i₁₁, and i₁₂ indicate the precoding matrix **W**.

Further, i₉, i₁₀, i₁₁, and i₁₂ may be reported based on subsets of **C**₁, **C**₂, **D***ᵢ*, and **W**₂ respectively. The subsets of **C**₁, **C**₂, **D***ᵢ*, and **W**₂ may be predefined, or may be determined and reported by the UE, or may also be notified by the eNB to the UE.

Specifically, when the UE selects the precoding matrix and determines a first index based on the first reference signal set, the index value may be calculated based on one reference signal subset. For example, the foregoing index value n is calculated based on the reference signal subset P in step 301, or the index values i₁ and i₂, or i₃, i₄, and i₅, or i₆, i₇, and i₈, or i₉, i₁₀, i₁₁, and i₁₂ are calculated based on the reference signal subset P in step 1.

Alternatively, the index value may be calculated in combination based on multiple reference signal subsets. For example, the index value n is calculated based on the reference signal subsets P1 and P2 in step 301, or the index values i₁ and i₂, or i₃, i₄, and i₅, or i₆, i₇, and i₈, or i₉, i₁₀, i₁₁, and i₁₂ are calculated based on the reference signal subsets P1 and P2 in step 1.

Alternatively, the index values are calculated separately based on multiple reference signal subsets. For example, the index value i₃ is calculated based on the reference signal subset P1 in step 301, and the index values i₄ and i₅ are calculated based on the reference signal subset P2 in step 301. Alternatively, the index value i₆ is calculated based on the reference signal subset P1 in step 301, and the index values i₇ and i₈ are calculated based on the reference signal subset P2 in step 301. Alternatively, the index values i₉ and i₁₀ are calculated based on the reference signal subset P1 in step 301, and the index values i₁₁ and i₁₂ are calculated based on the reference signal subset P2 in step 301.

Specifically, the UE may determine the foregoing one or more indexes according to a measured channel state based on a preset criterion, and the preset criterion may be a maximum throughput criterion or a maximum capacity criterion. After the one or more indexes are obtained, the UE may feed back the indexes to the eNB by using a PUCCH or a PUSCH.

Further, the precoding matrix indicator PMI may include one or more indexes, and the UE may report the indexes to the eNB through different subframes by using a physical uplink control channel (PUCCH, Physical Uplink Control Channel).

Further still, the foregoing multiple different indexes may be reported to the eNB through different subframes for different subbands on a frequency domain.

It should be noted particularly that matrices corresponding to the indexes may be single matrices, so that corresponding indexes do not need to be fed back. The single matrix may be a predefined matrix, or may also be notified by a base station by using signaling, or may also be obtained implicitly according to other parameters. For example, **W**₂ is fixedly selected as the matrix shown in the expression (51), so that an index corresponding to **W**₂ does not need to be fed back. In this case, **W**₂ is obtained implicitly according to a rank r of the precoding matrix.

304: The base station obtains the precoding matrix **W** based on the received precoding matrix indicator PMI.

305: The base station uses the precoding matrix **W** to transmit a signal vector **s.** Specifically, after precoding, a transmitted signal vector is **Ws**.

306: The UE receives the signal sent by the base station and performs data detection. Specifically, the signal received by the UE is: $y = HWs + n$ where **y** is a received signal vector, **H** is a channel matrix obtained through estimation, and **n** is measured noise and interference.

In this way, a first reference signal set is associated with or corresponds to a user equipment-specific matrix or matrix set, and a precoding matrix is a function of the user equipment-specific matrix or matrix set. Therefore, user equipment can select, based on the user equipment-specific matrix or matrix set, the precoding matrix and feed back a PMI, and a set of the precoding matrix forms a user equipment-specific codebook but not a cell specific codebook or system specific codebook. The cell specific codebook or system specific codebook is a precoding matrix set designed for all users in a cell or a system, while the user equipment-specific codebook is a subset of the cell specific codebook or system specific codebook. Therefore, in this embodiment of the present invention, CSI feedback precision can be improved without excessively increasing feedback overhead, thereby improving system performance.

Besides, a codebook structure **W** = **W**₁**W**₂ is used, where **W**₁ = diag{**X**₁,**X**₂} and **X***ᵢ* = **C***ᵢ*⊗**D**ᵢ, *i* = 1,2, or **W**₁ = **X** = **C**⊗**D**, quantization in a vertical direction and a horizontal direction can be effectively supported, and degrees of freedom at a horizontal and a vertical direction of an active antenna system AAS is fully utilized, so that feedback precision is improved, and MIMO performance, especially MU-MIMO performance, is improved.

Moreover, one or more indexes are fed back based on a subset to indicate a precoding matrix, and correlation between time/frequency domain/space of a channel is fully utilized, so that feedback overhead is greatly reduced.

Further, before step 301 of receiving a first reference signal set sent by a base station, the following optional steps may further be included:
receiving a second reference signal set sent by the base station, where the second reference signal set is associated with a subset of a matrix or matrix set; and
determining and reporting, by the UE based on the received second reference signal set, a second index, where the second index is used for indicating an antenna port or antenna port subset, initially selected by the UE, in the second reference signal set, or a subset of a matrix or matrix set that is associated with the antenna port or antenna port subset initially selected by the UE.

The first reference signal set is a subset of the second reference signal set, or the second reference signal set is a superset of the first reference signal set.

Specifically, that the first reference signal set is a subset of the second reference signal set (or equivalently, the second reference signal set is a superset of the first reference signal set) includes that: the second reference signal set is the same as the first reference signal set; or the second reference signal set is a proper subset of the first reference signal set, and in this case, a quantity of reference signals included in the second reference signal set is less than a quantity of reference signals included in the first reference signal set.

Further, the base station uses a reference signal or a reference signal subset corresponding to the antenna port or antenna port subset, initially selected by the UE and indicated by the second index that is reported by the UE, in the second reference signal set, as the first reference signal set; or the base station uses a subset of a matrix or matrix set that is associated with the antenna port or antenna port subset initially selected by the UE and indicated by the second index that is reported by the UE, as a matrix or matrix set that is associated with the first reference signal set.

It should be noted that operation based on the second index by the base station is not limited in this embodiment of the present invention. In other words, the base station may refer to the second index as assistance, but the base station also may not refer to the second index.

FIG. 4 is a block diagram of user equipment according to an embodiment of the present invention. The user equipment 40 in FIG. 4 includes a receiving unit 41, a determining unit 42, and a sending unit 43.

The receiving unit 41 receives a first reference signal set sent by a base station, where the first reference signal set is associated with a user equipment-specific (UE-specific) matrix or matrix set. The determining unit 42 selects a precoding matrix based on the first reference signal set, where the precoding matrix is a function of the user equipment-specific matrix or matrix set. The sending unit 43 sends a precoding matrix indicator PMI to the base station, where the PMI corresponds to the selected precoding matrix.

In this embodiment of the present invention, a first reference signal set is associated with or corresponds to a user equipment-specific matrix or matrix set, a precoding matrix is a function of the user equipment-specific matrix or matrix set, so that the PMI can select, based on the user equipment-specific matrix or matrix set, the precoding matrix and feed back a PMI, and a set of the precoding matrix forms a user equipment-specific codebook but not a cell specific codebook or system specific codebook. The cell specific codebook or system specific codebook is a precoding matrix set designed for all users in a cell or a system, while the user equipment-specific codebook is a subset of the cell specific codebook or system specific codebook. Therefore, in this embodiment of the present invention, CSI feedback precision can be improved without excessively increasing feedback overhead, thereby improving system performance.

Optionally, as an embodiment, the receiving unit 41 is further configured to receive the user equipment-specific matrix or matrix set notified by the base station.

Optionally, as another embodiment, the receiving unit is further configured to: before the first reference signal set is received, receive a second reference signal set sent by the base station, where the second reference signal set is associated with a matrix or matrix set; the determining unit is further configured to determine a second index based on the second reference signal set, where the second index is used for indicating an antenna port or antenna port subset selected by the user equipment, or a matrix or matrix set that is associated with the antenna port or antenna port subset selected by the user equipment; and the sending unit is further configured to send the second index to the base station.

Optionally, the first reference signal set is a subset of the second reference signal set.

Optionally, the matrix or matrix set associated with the second reference signal set is cell specific or system specific.

Optionally, as another embodiment, the receiving unit is specifically configured to receive reference signals of the second reference signal set that are sent at different times by the base station. Here, different times may be associated with a same matrix or different matrices separately, or may be associated with a same subset or different subsets of a matrix set separately.

Optionally, as another embodiment, the first reference signal set includes one or more reference signal subsets, and the reference signal subset corresponds to a co-polarized antenna port subset, or corresponds to an antenna port subset that is arranged in a same direction in an antenna port array, or corresponds to an antenna port subset that is located at a quasi-co-location.

Optionally, as another embodiment, the receiving unit is specifically configured to receive reference signals of the first reference signal set that are sent at different times by the base station. Here, different times may be associated with a same matrix or different matrices separately, or may be associated with a same subset or different subsets of a matrix set separately.

Optionally, as another embodiment, the precoding matrix **W** is a product of two matrices **W**₁ and **W**₂, **W** = **W**₁**W**₂, where the matrix **W**₁ is a block diagonal matrix, the block diagonal matrix includes at least one block matrix, and each block matrix is a function of the user equipment-specific matrix or matrix set.

Optionally, the matrix **W**₂ is used to select or perform weighted combination on column vectors in the matrix **W**₁, so as to form the matrix **W**.

Optionally, as another embodiment, each block matrix **X** is a Kronecker kronecker product of two matrices **C** and **D, X** = **C**⊗**D**, and at least one matrix in the two matrices **C** and **D** is a function of the user equipment-specific matrix or matrix set.

Optionally, as another embodiment, columns of at least one matrix in the two matrices **C** and **D** are rotations of column vectors in a matrix in the user equipment-specific matrix or matrix set, that is, a k^{th} column vector **c***ₖ* of the matrix **C** is shown in the expression (2) or (3); or, an l^{th} column vector **d***ₗ* of the matrix **D** is shown in the expression (4) or (5), where *N_{V}, N_{H}, N_{C},* and *N_{D}* are positive integers, **a***ₘ* is an m^{th} column vector of a matrix **A**, and the matrix **A** is a matrix in the user equipment-specific matrix or matrix set.

It should be noted that, that column vectors of the matrix **C** or matrix **D** that corresponds to the block matrix **X** at a different location on a diagonal in **W**₁ satisfy the expressions (2) to (5) does not mean that the block matrix **X** at a different location on a diagonal in **W**₁ has a same matrix **C** or matrix **D;** in contrast, the block matrix **X** at a different location may have a same or different matrix **C** or matrix **D.**

Optionally, as another embodiment, a matrix in the user equipment-specific matrix or matrix set is a matrix formed by columns being DFT vectors, or a matrix formed by column vectors of a Hadamard matrix or a Householder matrix.

Optionally, as another embodiment, the DFT vector **a***ₗ* is shown in the expression (6), where *N_{C}* ≥ *N* or *N_{D}* ≥ *N*.

Optionally, as another embodiment, the first reference signal set includes at least one reference signal subset, and the reference signal subset is associated with a set of the matrix **C** or the matrix **D.**

Optionally, as another embodiment, the reference signal subset has a sending period longer than that of another reference signal.

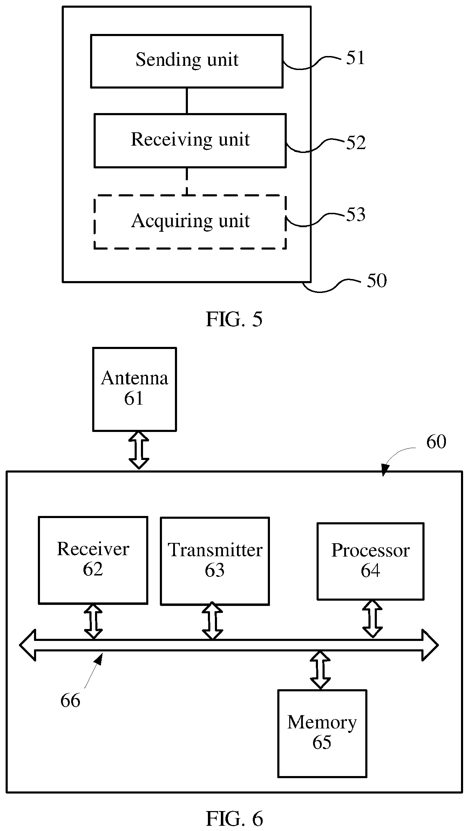

FIG. 5 is a block diagram of a base station according to an embodiment of the present invention. The base station 50 in FIG. 5 includes a sending unit 51 and a receiving unit 52.

The sending unit 51 is configured to send a first reference signal set to user equipment, where the first reference signal set is associated with a user equipment-specific (UE-specific) matrix or matrix set; and the receiving unit 52 is configured to receive a precoding matrix indicator PMI sent by the user equipment, where the PMI is used for indicating a precoding matrix that is selected based on the first reference signal by the user equipment, and the precoding matrix is a function of the user equipment-specific matrix or matrix set.

In this embodiment of the present invention, a first reference signal set is associated with or corresponds to a user equipment-specific matrix or matrix set, a precoding matrix is a function of the user equipment-specific matrix or matrix set, so that user equipment can select, based on the matrix or matrix set, the precoding matrix and feed back a PMI, and a set of the precoding matrix forms a user equipment-specific codebook but not a cell specific codebook or system specific codebook. The cell specific codebook or system specific codebook is a precoding matrix set designed for all users in a cell or a system, while the user equipment-specific codebook is a subset of the cell specific codebook or system specific codebook. Therefore, in this embodiment of the present invention, CSI feedback precision can be improved without excessively increasing feedback overhead, thereby improving system performance.

Optionally, the base station 50 may further include an acquiring unit 53, configured to obtain the precoding matrix according to the received PMI.

Optionally, as an embodiment, the sending unit 51 is further configured to notify the user equipment of the user equipment-specific matrix or matrix set.

Optionally, as another embodiment, the sending unit 51 is further configured to: before the first reference signal set is sent to the user equipment, send a second reference signal set to the user equipment, where the second reference signal set is associated with a matrix or matrix set; and the receiving unit is further configured to receive a second index that is determined based on the second reference signal set by the user equipment, where the second index is used for indicating an antenna port or antenna port subset selected by the user equipment, or a matrix or matrix set that is associated with the antenna port or antenna port subset selected by the user equipment.

Optionally, the first reference signal set is a subset of the second reference signal set.

Optionally, the matrix or matrix set associated with the second reference signal set is cell specific or system specific.

Optionally, as an embodiment, the acquiring unit 53 is further configured to measure an uplink physical channel or an uplink physical signal, and obtain channel estimation of the user equipment according to channel reciporocity. Based on a predefined criterion, the first reference signal and the user equipment-specific matrix or matrix set are selected for a user. The uplink physical channel may be a physical uplink control channel (Physical Uplink Control Channel, PUCCH for short) or a physical uplink shared channel (Physical Uplink Shared Channel, PUSCH for short); the physical signal may be a sounding reference signal (Sounding Reference Signal, SRS for short) or another uplink demodulation reference signal (DeModulation Reference signal, DMRS for short).

Optionally, as another embodiment, the sending unit is specifically configured to send reference signals of the second reference signal set to the user equipment at different times. Here, different times may be associated with a same matrix or different matrices separately, or may be associated with a same subset or different subsets of a matrix set separately.

Optionally, as another embodiment, the first reference signal set includes one or more reference signal subsets, and the reference signal subset corresponds to a co-polarized antenna port subset, or corresponds to an antenna port subset that is arranged in a same direction in an antenna port array, or corresponds to a quasi-co-location antenna port subset.

Optionally, as another embodiment, the sending unit is specifically configured to send reference signals of the first reference signal set to the user equipment at different times. Here, different times may be associated with a same matrix or different matrices separately, or may be associated with a same subset or different subsets of a matrix set separately.

Optionally, as another embodiment, the precoding matrix **W** is a product of two matrices **W**₁ and **W**₂, **W** = **W**₁**W**₂, where the matrix **W**₁ is a block diagonal matrix, the block diagonal matrix includes at least one block matrix, and each block matrix is a function of the user equipment-specific matrix or matrix set.

Optionally, the matrix **W**₂ is used to select or perform weighted combination on column vectors in the matrix **W**₁, so as to form the matrix **W** .

Optionally, as another embodiment, each block matrix **X** is a kronecker product of two matrices **C** and **D, X** = **C** ⊗ **D,** and at least one matrix in the two matrices **C** and **D** is a function of the user equipment-specific matrix or matrix set.

Optionally, as another embodiment, columns of at least one matrix in the two matrices **C** and **D** are rotations of column vectors in a matrix in the user equipment-specific matrix or matrix set, that is, a k^{th} column vector **c***ₖ* of the matrix **C** is shown in the expression (2) or (3); or, an l^{th} column vector **d***ₗ* of the matrix **D** is shown in the expression (4) or (5), where *N_{V}, N_{H}, N_{C},* and *N_{D}* are positive integers, **a***ₘ* is an m^{th} column vector of a matrix **A**, and the matrix **A** is a matrix in the user equipment-specific matrix or matrix set.

It should be noted that, that column vectors of the matrix **C** or matrix **D** that corresponds to the block matrix **X** at a different location on a diagonal in **W**₁ satisfy the expressions (2) to (5) does not mean that the block matrix **X** at a different location on a diagonal in **W**₁ has a same matrix **C** or matrix **D;** in contrast, the block matrix **X** at a different location may have a same or different matrix **C** or matrix **D.**

Optionally, as another embodiment, a matrix in the user equipment-specific matrix or matrix set is a matrix formed by columns being DFT vectors, or a matrix formed by column vectors of a Hadamard matrix or a Householder matrix.

Optionally, as another embodiment, the DFT vector **a***ₗ* is shown in the expression (6), where *N_{C}* ≥ *N* or *N_{D}* ≥ *N*.

Optionally, as another embodiment, the first reference signal set includes at least one reference signal subset, and the reference signal subset is associated with a set of the matrix **C** or the matrix **D.**

Optionally, as another embodiment, the reference signal subset has a sending period longer than that of another reference signal.

FIG. 6 is a block diagram of user equipment according to another embodiment of the present invention. The user equipment 60 in FIG. 6 includes a receiver 62, a transmitter 63, a processor 64, and a memory 65.

The receiver 62 is configured to receive a first reference signal set sent by a base station, where the first reference signal set is associated with a user equipment-specific (UE specific) matrix or matrix set.

The memory 65 stores an instruction that enables the processor 64 to perform the following operation: selecting a precoding matrix based on the first reference signal set, where the precoding matrix is a function of the user equipment-specific matrix or matrix set.

The transmitter 63 is configured to send a precoding matrix indicator PMI to the base station, where the PMI corresponds to the selected precoding matrix.

In this embodiment of the present invention, a first reference signal set is associated with or corresponds to a user equipment-specific matrix or matrix set, a precoding matrix is a function of the user equipment-specific matrix or matrix set, so that the user equipment can select, based on the user equipment-specific matrix or matrix set, the precoding matrix and feed back a PMI, and a set of the precoding matrix forms a user equipment-specific codebook but not a cell specific codebook or system specific codebook. The cell specific codebook or system specific codebook is a precoding matrix set designed for all users in a cell or a system, while the user equipment-specific codebook is a subset of the cell specific codebook or system specific codebook. Therefore, in this embodiment of the present invention, CSI feedback precision can be improved without excessively increasing feedback overhead, thereby improving system performance.

The receiver 62, the transmitter 63, the processor 64, and the memory 65 may be integrated into a processing chip. Alternatively, as shown in FIG. 6, the receiver 62, the transmitter 63, the processor 64, and the memory 65 are connected by using a bus 66.

In addition, the user equipment 60 may further include an antenna 61. The processor 64 may further control an operation of the user equipment 60, and the processor 64 may further be referred to as a CPU (Central Processing Unit, central processing unit). The memory 65 may include a read only memory and a random access memory, and provides an instruction and data to the processor 64. A part of the memory 65 may further include a non-volatile random access memory. Components of the user equipment 60 are coupled together by using a bus system 66. The bus system 66 may include, in addition to a data bus, a power bus, a control bus, a status signal bus, and the like. However, for the purpose of clear description, all buses are marked as the bus system 66 in the figure.

Optionally, as an embodiment, the receiver 62 is further configured to receive the user equipment-specific matrix or matrix set notified by the base station.

Optionally, as another embodiment, the receiver 62 is further configured to: before the first reference signal set is received, receive a second reference signal set sent by the base station, where the second reference signal set is associated with a matrix or matrix set; the memory 65 further stores an instruction that enables the processor 64 to perform the following operation: determining a second index based on the second reference signal set, where the second index is used for indicating an antenna port or antenna port subset selected by the user equipment, or a matrix or matrix set that is associated with the antenna port or antenna port subset selected by the user equipment 60; and the transmitter 63 is further configured to send the second index to the base station.

Optionally, the first reference signal set is a subset of the second reference signal set.

Optionally, as another embodiment, the receiver 62 is specifically configured to receive reference signals of the second reference signal set that are sent at different times by the base station. Here, different times may be associated with a same matrix or different matrices separately, or may be associated with a same subset or different subsets of a matrix set separately.

Optionally, as another embodiment, the first reference signal set includes one or more reference signal subsets, and the reference signal subset corresponds to a co-polarized antenna port subset, or corresponds to an antenna port subset that is arranged in a same direction in an antenna port array, or corresponds to an antenna port subset that is located at a quasi-co-location.

Optionally, as another embodiment, the receiver 62 is specifically configured to receive reference signals of the first reference signal set that are sent at different times by the base station. Here, different times may be associated with a same matrix or different matrices separately, or may be associated with a same subset or different subsets of a matrix set separately.

Optionally, as another embodiment, the precoding matrix **W** is a product of two matrices **W**₁ and **W**₂, **W** = **W**₁**W**₂, where the matrix **W**₁ is a block diagonal matrix, the block diagonal matrix includes at least one block matrix, and each block matrix is a function of the user equipment-specific matrix or matrix set.

Optionally, the matrix **W**₂ is used to select or perform weighted combination on column vectors in the matrix **W**₁, so as to form the matrix **W** .

Optionally, as another embodiment, each block matrix **X** is a kronecker product of two matrices **C** and **D, X** = **C**⊗**D**, and at least one matrix in the two matrices **C** and **D** is a function of the user equipment-specific matrix or matrix set.

Optionally, as another embodiment, columns of at least one matrix in the two matrices **C** and **D** are rotations of column vectors in a matrix in the user equipment-specific matrix or matrix set, that is, a k^{th} column vector **c***ₖ* of the matrix **C** is shown in the expression (2) or (3); or, an l^{th} column vector **d***ₗ* of the matrix **D** is shown in the expression (4) or (5), where *N_{V}, N_{H}, N_{C},* and *N_{D}* are positive integers, **a***ₘ* is an m^{th} column vector of a matrix **A**, and the matrix **A** is a matrix in the user equipment-specific matrix or matrix set.

It should be noted that, that column vectors of the matrix **C** or matrix **D** that corresponds to the block matrix **X** at a different location on a diagonal in **W**₁ satisfy the expressions (2) to (5) does not mean that the block matrix **X** at a different location on a diagonal in **W**₁ has a same matrix **C** or matrix **D;** in contrast, the block matrix **X** at a different location may have a same or different matrix **C** or matrix **D.**

Optionally, as another embodiment, a matrix in a subset of the user equipment-specific matrix or matrix set is a matrix formed by columns being DFT vectors, or a matrix formed by column vectors of a Hadamard matrix or a Householder matrix.

Optionally, as another embodiment, the DFT vector **a***ₗ* is shown in the expression (6), where *N_{C}* ≥ *N* or *N_{D}* ≥ *N*.

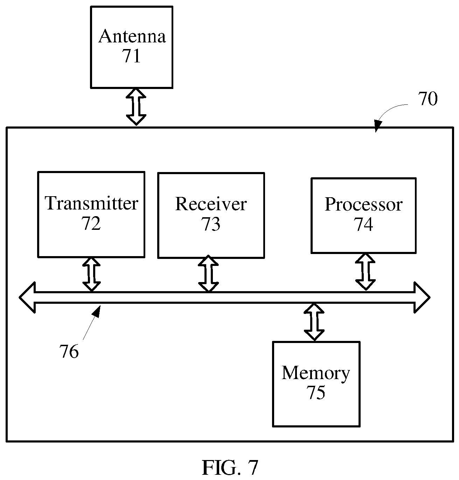

FIG. 7 is a block diagram of a base station according to another embodiment of the present invention. The base station 70 in FIG. 7 includes a transmitter 72, a receiver 73, a processor 74, and a memory 75.

The transmitter 72 is configured to send a first reference signal set to user equipment, where the first reference signal set is associated with a user equipment-specific (UE specific) matrix or matrix set.

The receiver 73 is configured to receive a precoding matrix indicator PMI sent by the user equipment, where the PMI is used for indicating a precoding matrix that is selected based on the first reference signal by the user equipment, and the precoding matrix is a function of the user equipment-specific matrix or matrix set.

Optionally, the memory 75 may store an instruction that enables the processor 74 to perform the following operation: obtaining the precoding matrix according to the received PMI.

In this embodiment of the present invention, a first reference signal set is associated with or corresponds to a user equipment-specific matrix or matrix set, a precoding matrix is a function of the user equipment-specific matrix or matrix set, so that user equipment can select, based on the user equipment-specific matrix or matrix set, the precoding matrix and feed back a PMI, and a set of the precoding matrix forms a user equipment-specific codebook but not a cell specific codebook or system specific codebook. The cell specific codebook or system specific codebook is a precoding matrix set designed for all users in a cell or a system, while the user equipment-specific codebook is a subset of the cell specific codebook or system specific codebook. Therefore, in this embodiment of the present invention, CSI feedback precision can be improved without excessively increasing feedback overhead, thereby improving system performance.

The transmitter 72, the receiver 73, the processor 74, and the memory 75 may be integrated into a processing chip. Alternatively, as shown in FIG. 6, the transmitter 72, the receiver 73, the processor 74, and the memory 75 are connected by using a bus 76.

In addition, the base station 70 may further include an antenna 71. The processor 74 may further control an operation of the base station 70, and the processor 74 may further be referred to as a CPU (Central Processing Unit, central processing unit). The memory 75 may include a read only memory and a random access memory, and provides an instruction and data to the processor 74. A part of the memory 75 may further include a non-volatile random access memory. Components of the user equipment 70 are coupled together by using a bus system 76. The bus system 76 may include, in addition to a data bus, a power bus, a control bus, a status signal bus, and the like. However, for the purpose of clear description, all buses are marked as the bus system 76 in the figure.

Optionally, as an embodiment, the transmitter 72 is further configured to notify the user equipment of the user equipment-specific matrix or matrix set.

Optionally, as another embodiment, the transmitter 72 is further configured to: before the first reference signal set is sent to the user equipment, send a second reference signal set to the user equipment, where the second reference signal set is associated with a matrix or matrix set; and the receiver 73 is further configured to receive a second index that is determined based on the second reference signal set by the user equipment, where the second index is used for indicating an antenna port or antenna port subset selected by the user equipment, or a matrix or matrix set that is associated with the antenna port or antenna port subset selected by the user equipment.

Optionally, the first reference signal set is a subset of the second reference signal set.

Optionally, the matrix or matrix set associated with the second reference signal set is cell specific or system specific.

Optionally, as an embodiment, the processor is further configured to measure an uplink physical channel or an uplink physical signal, and obtain channel estimation of the user equipment according to channel reciprocity. Based on a predefined criterion, the first reference signal and the user equipment-specific matrix or matrix set are selected for a user. The uplink physical channel may be a physical uplink control channel (Physical Uplink Control Channel, PUCCH for short) or a physical uplink shared channel (Physical Uplink Shared Channel, PUSCH for short); the physical signal may be a sounding reference signal (Sounding Reference Signal, SRS for short) or another uplink demodulation reference signal (DeModulation Reference signal, DMRS for short).

Optionally, as another embodiment, the transmitter 72 is specifically configured to send reference signals of the second reference signal set to the user equipment at different times. Here, different times may be associated with a same matrix or different matrices separately, or may be associated with a same subset or different subsets of a matrix set separately.

Optionally, as another embodiment, the first reference signal set includes one or more reference signal subsets, and the reference signal subset corresponds to a co-polarized antenna port subset, or corresponds to an antenna port subset that is arranged in a same direction in an antenna port array, or corresponds to a quasi-co-location antenna port subset.

Optionally, as another embodiment, the transmitter 72 is specifically configured to send reference signals of the first reference signal set to the user equipment at different times. Here, different times may be associated with a same matrix or different matrices separately, or may be associated with a same subset or different subsets of a matrix set separately.

Optionally, as another embodiment, the precoding matrix **W** is a product of two matrices **W**₁ and **W**₂, **W** = **W**₁**W**₂, where the matrix **W**₁ is a block diagonal matrix, the block diagonal matrix includes at least one block matrix, and each block matrix is a function of the user equipment-specific matrix or matrix set.

Optionally, the matrix **W**₂ is used to select or perform weighted combination on column vectors in the matrix **W**₁, so as to form the matrix **W** .

Optionally, as another embodiment, each block matrix **X** is a kronecker product of two matrices **C** and **D, X** = **C** ⊗ **D**, and at least one matrix in the two matrices **C** and **D** is a function of the user equipment-specific matrix or matrix set.

Optionally, as another embodiment, columns of at least one matrix in the two matrices **C** and **D** are rotations of column vectors in a matrix in the user equipment-specific matrix or matrix set, that is, a k^{th} column vector **C** of the matrix **c***ₖ* is shown in the expression (2) or (3); or, an l^{th} column vector **d***ₗ* of the matrix **D** is shown in the expression (4) or (5), where *N_{V}, N_{H}, N_{C},* and *N_{D}* are positive integers, **a***ₘ* is an m^{th} column vector of a matrix **A**, and the matrix **A** is a matrix in the user equipment-specific matrix or matrix set.

It should be noted that, that column vectors of the matrix **C** or matrix **D** that corresponds to the block matrix **X** at a different location on a diagonal in **W**₁ satisfy the expressions (2) to (5) does not mean that the block matrix **X** at a different location on a diagonal in **W**₁ has a same matrix **C** or matrix **D;** in contrast, the block matrix **X** at a different location may have a same or different matrix **C** or matrix **D.**

Optionally, as another embodiment, a matrix in the user equipment-specific matrix or matrix set is a matrix formed by columns being DFT vectors, or a matrix formed by column vectors of a Hadamard matrix or a Householder matrix.

Optionally, as another embodiment, the DFT vector **a***ₗ* is shown in the expression (6), where *N_{C}* ≥ *N* or *N_{D}* ≥ *N*.

The present application also provides following embodiments. It should be noted that it is not necessary that reference numbers of the following embodiments comply with the order of numbers of the above embodiments.
Embodiment 1. A method for determining a precoding matrix indicator, comprising:
   receiving a first reference signal set sent by a base station, wherein the first reference signal set is associated with a user equipment-specific matrix or matrix set;
   selecting a precoding matrix based on the first reference signal set, wherein the precoding matrix is a function of the user equipment-specific matrix or matrix set; and
   sending a precoding matrix indicator PMI to the base station, wherein the PMI corresponds to the selected precoding matrix.
Embodiment 2. The method according to embodiment 1, wherein the user equipment-specific matrix or matrix set is notified by the base station to user equipment.
Embodiment 3. The method according to embodiment 1, wherein the first reference signal set comprises one or more reference signal subsets, and the reference signal subset corresponds to a co-polarized antenna port subset, or corresponds to an antenna port subset that is arranged in a same direction in an antenna port array, or corresponds to an antenna port subset that is located at a quasi-co-location.
Embodiment 4. The method according to any one of embodiments 1 to 3, wherein that the precoding matrix is a function of the user equipment-specific matrix or matrix set comprises that: the precoding matrix **W** is a product of two matrices **W**₁ and **W**₂, **W** = **W**₁**W**₂, wherein the matrix **W**₁ is a block diagonal matrix, the block diagonal matrix comprises at least one block matrix **X**, and each block matrix is a function of the user equipment-specific matrix or matrix set.
Embodiment 5. The method according to embodiment 4, wherein each block matrix **X** is a Kronecker kronecker product of two matrices **C** and **D, X** = **C**⊗**D**, and at least one matrix in the two matrices **C** and **D** is a function of the user equipment-specific matrix or matrix set.
Embodiment 6. The method according to embodiment 5, wherein that at least one matrix in the two matrices **C** and **D** is a function of the user equipment-specific matrix or matrix set comprises that:
   a k^{th} column vector **c***ₖ* of the matrix **C** is: ${c}_{k} = diag \left\{1, {e}^{j 2 π / {N}_{C}}, ⋯, {e}^{j 2 {πN}_{V} / {N}_{C}}\right\} {a}_{m} ,$ or ${c}_{k} = diag \left\{1,{e}^{j 2 π / {N}_{C}},⋯,{e}^{j 2 π \left({N}_{V}/2-1\right) / {N}_{C}},{e}^{{jθ}_{△}},{e}^{{jθ}_{△}}{e}^{j 2 π / {N}_{C}},⋯,{e}^{{jθ}_{△}}{e}^{j 2 π \left({N}_{V}/2-1\right) / {N}_{C}}\right\} {a}_{m}$ or; an l^{th} column vector **d***ₗ* of the matrix **D** is: ${d}_{l} = diag \left\{1, {e}^{j 2 π / {N}_{D}}, ⋯, {e}^{j 2 {πN}_{H} / {N}_{D}}\right\} {a}_{m}$ or ${d}_{l} = diag \left\{1,{e}^{j 2 π / {N}_{D}},⋯,{e}^{j 2 π \left({N}_{H}/2-1\right) / {N}_{D}},{e}^{{jϕ}_{△}},{e}^{{jϕ}_{△}}{e}^{j 2 π / {N}_{D}},⋯,{e}^{{jϕ}_{△}}{e}^{j 2 π \left({N}_{H}/2-1\right) / {N}_{D}}\right\} {a}_{m}$ wherein N*_{V},* N*_{H},* N*_{C}*, and N*_{D}* are positive integers, **a***ₘ* is an m^{th} column vector of a matrix **A**, the matrix **A** is a matrix in the user equipment-specific matrix or matrix set, and *θ*_{△} and *φ*_{△} are phase shifts.
Embodiment 7. The method according to any one of embodiments 1 to 6, wherein the matrix in the user equipment-specific matrix or matrix set is a matrix formed by columns being discrete Fourier transformation DFT vectors, or a matrix formed by column vectors of a Hadamard Hadamard matrix or a Householder Householder matrix.
Embodiment 8. The method according to embodiment 7, wherein that columns of the matrix in the user equipment-specific matrix or matrix set are discrete Fourier transformation DFT vectors comprises that: the DFT vector **a***ₗ* satisfies: ${a}_{l} = {\left[\begin{matrix}{e}^{j \frac{2 π ⋅ 0 ⋅ l}{N}} & {e}^{j \frac{2 π ⋅ 1 ⋅ l}{N}} & ⋯ & {e}^{j \frac{2 π ⋅ \left(M-1\right) ⋅ l}{N}}\end{matrix}\right]}^{T} ,$ wherein []^{T} is a matrix transpose, M and N are positive integers, and N_{C} ≥ N or N_{D} ≥ N.
Embodiment 9. The method according to any one of embodiments 5 to 8, wherein the first reference signal set comprises at least one reference signal subset, and the reference signal subset is associated with a set of the matrix **C** or the matrix **D.**
Embodiment 10. The method according to embodiment 9, wherein the reference signal subset has a sending period longer than that of another reference signal.
Embodiment 11. A method for determining a precoding matrix indicator, comprising:
   sending a first reference signal set to user equipment, wherein the first reference signal set is associated with a user equipment-specific matrix or matrix set; and
   receiving a precoding matrix indicator PMI sent by the user equipment, wherein the PMI is used for indicating a precoding matrix that is selected based on the first reference signal by the user equipment, and the precoding matrix is a function of the user equipment-specific matrix or matrix set.
Embodiment 12. The method according to embodiment 11, wherein the user equipment-specific matrix or matrix set is notified by a base station to the user equipment.
Embodiment 13. The method according to embodiment 11, wherein the first reference signal set comprises one or more reference signal subsets, and the reference signal subset corresponds to a co-polarized antenna port subset, or corresponds to an antenna port subset that is arranged in a same direction in an antenna port array, or corresponds to a quasi-co-location antenna port subset.
Embodiment 14. The method according to any one of embodiments 11 to 13, wherein that the precoding matrix is a function of the user equipment-specific matrix or matrix set comprises that: the precoding matrix **W** is a product of two matrices **W**₁ and **W**₂, W = **W**₁**W**₂, wherein the matrix **W**₁ is a block diagonal matrix, the block diagonal matrix comprises at least one block matrix, and each block matrix is a function of a matrix in the user equipment-specific matrix or matrix set.
Embodiment 15. The method according to embodiment 14, wherein each block matrix **X** is a Kronecker kronecker product of two matrices **C** and **D, X** = **C**⊗**D**, and at least one matrix in the two matrices **C** and **D** is a function of the user equipment-specific matrix or matrix set.
Embodiment 16. The method according to embodiment 15, wherein that at least one matrix in the two matrices **C** and **D** is a function of the user equipment-specific matrix or matrix set comprises that:
   a k^{th} column vector **c***ₖ* of the matrix **C** is: ${c}_{k} = diag \left\{1, {e}^{j 2 π / {N}_{C}}, ⋯, {e}^{j 2 {πN}_{V} / {N}_{C}}\right\} {a}_{m} ,$ or ${c}_{k} = diag \left\{1,{e}^{j 2 π / {N}_{C}},⋯,{e}^{j 2 π \left({N}_{V}/2-1\right) / {N}_{C}},{e}^{{jθ}_{△}},{e}^{{jθ}_{△}}{e}^{j 2 π / {N}_{C}},⋯,{e}^{{jθ}_{△}}{e}^{j 2 π \left({N}_{V}/2-1\right) / {N}_{C}}\right\} {a}_{m}$ or; an l^{th} column vector **d***ₗ* of the matrix **D** is: ${d}_{l} = diag \left\{1, {e}^{j 2 π / {N}_{D}}, ⋯, {e}^{j 2 {πN}_{H} / {N}_{D}}\right\} {a}_{m}$ or ${d}_{l} = diag \left\{1,{e}^{j 2 π / {N}_{D}},⋯,{e}^{j 2 π \left({N}_{H}/2-1\right) / {N}_{D}},{e}^{{jϕ}_{△}},{e}^{{jϕ}_{△}}{e}^{j 2 π / {N}_{D}},⋯,{e}^{{jϕ}_{△}}{e}^{j 2 π \left({N}_{H}/2-1\right) / {N}_{D}}\right\} {a}_{m}$ wherein N*_{V},* N*_{H},* Nc, and N*_{D}* are positive integers, **a***ₘ* is an m^{th} column vector of a matrix **A**, the matrix **A** is a matrix in the user equipment-specific matrix or matrix set, and *θ*_{△} and *φ*_{△} are phase shifts.
Embodiment 17. The method according to any one of embodiments 11 to 16, wherein a matrix in a subset of the user equipment-specific matrix or matrix set is a matrix formed by columns being discrete Fourier transformation DFT vectors, or a matrix formed by column vectors of a Hadamard Hadamard matrix or a Householder Householder matrix.
Embodiment 18. The method according to embodiment 17, wherein that columns of the matrix in the subset of the user equipment-specific matrix or matrix set are discrete Fourier transformation DFT vectors comprises that: the DFT vector **a***ₗ* satisfies: ${a}_{l} = {\left[\begin{matrix}{e}^{j \frac{2 π ⋅ 0 ⋅ l}{N}} & {e}^{j \frac{2 π ⋅ 1 ⋅ l}{N}} & ⋯ & {e}^{j \frac{2 π ⋅ \left(M-1\right) ⋅ l}{N}}\end{matrix}\right]}^{T} ,$ wherein []^{T} is a matrix transpose, M and N are positive integers, and N_{C} ≥ N or N_{D} ≥ N.
Embodiment 19. The method according to any one of embodiments 15 to 18, wherein the first reference signal set comprises at least one reference signal subset, and the reference signal subset is associated with a set of the matrix **C** or the matrix **D.**
Embodiment 20. The method according to embodiment 19, wherein the reference signal subset has a sending period longer than that of another reference signal.
Embodiment 21. User equipment, comprising:
   a receiving unit, configured to receive a first reference signal set sent by a base station, wherein the first reference signal set is associated with a user equipment-specific matrix or matrix set;
   a determining unit, configured to select a precoding matrix based on the first reference signal set, wherein the precoding matrix is a function of the user equipment-specific matrix or matrix set; and
   a sending unit, configured to send a precoding matrix indicator PMI to the base station, wherein the PMI corresponds to the selected precoding matrix.
Embodiment 22. The user equipment according to embodiment 21, wherein the receiving unit is further configured to receive the user equipment-specific matrix or matrix set notified by the base station.
Embodiment 23. The user equipment according to embodiment 21, wherein the first reference signal set comprises one or more reference signal subsets, and the reference signal subset corresponds to a co-polarized antenna port subset, or corresponds to an antenna port subset that is arranged in a same direction in an antenna port array, or corresponds to an antenna port subset that is located at a quasi-co-location.
Embodiment 24. The user equipment according to any one of embodiments 21 to 23, wherein,
   the precoding matrix **W** is a product of two matrices **W**₁ and **W**₂, **W** = **W**₁**W**₂, wherein the matrix **W**₁ is a block diagonal matrix, the block diagonal matrix comprises at least one block matrix, and each block matrix is a function of the user equipment-specific matrix or matrix set.
Embodiment 25. The user equipment according to embodiment 24, wherein each block matrix **X** is a Kronecker kronecker product of two matrices **C** and **D, X** = **C**⊗**D,** and at least one matrix in the two matrices **C** and **D** is a function of the user equipment-specific matrix or matrix set.
Embodiment 26. The user equipment according to embodiment 25, wherein that at least one matrix in the two matrices **C** and **D** is a function of the user equipment-specific matrix or matrix set comprises that:
   a k^{th} column vector **c***ₖ* of the matrix **C** is: ${c}_{k} = diag \left\{1, {e}^{j 2 π / {N}_{C}}, ⋯, {e}^{j 2 {πN}_{V} / {N}_{C}}\right\} {a}_{m} ,$ or ${c}_{k} = diag \left\{1,{e}^{j 2 π / {N}_{C}},⋯,{e}^{j 2 π \left({N}_{V}/2-1\right) / {N}_{C}},{e}^{{jθ}_{△}},{e}^{{jθ}_{△}}{e}^{j 2 π / {N}_{C}},⋯,{e}^{{jθ}_{△}}{e}^{j 2 π \left({N}_{V}/2-1\right) / {N}_{C}}\right\} {a}_{m}$ or; an l^{th} column vector **d***ₗ* of the matrix **D** is: ${d}_{l} = diag \left\{1, {e}^{j 2 π / {N}_{D}}, ⋯, {e}^{j 2 {πN}_{H} / {N}_{D}}\right\} {a}_{m}$ or ${d}_{l} = diag \left\{1,{e}^{j 2 π / {N}_{D}},⋯,{e}^{j 2 π \left({N}_{H}/2-1\right) / {N}_{D}},{e}^{{jϕ}_{△}},{e}^{{jϕ}_{△}}{e}^{j 2 π / {N}_{D}},⋯,{e}^{{jϕ}_{△}}{e}^{j 2 π \left({N}_{H}/2-1\right) / {N}_{D}}\right\} {a}_{m}$ wherein N*_{V},* N*_{H},* N*_{C},* and N*_{D}* are positive integers, **a***ₘ* is an m^{th} column vector of a matrix **A**, the matrix **A** is a matrix in the user equipment-specific matrix or matrix set, and *θ*_{△} and *φ*_{△} are phase shifts.
Embodiment 27. The user equipment according to any one of embodiments 21 to 26, wherein a matrix in a subset of the user equipment-specific matrix or matrix set is a matrix formed by columns being discrete Fourier transformation DFT vectors, or a matrix formed by column vectors of a Hadamard Hadamard matrix or a Householder Householder matrix.
Embodiment 28. The user equipment according to embodiment 27, wherein the DFT vector **a***ₗ* satisfies: ${a}_{l} = {\left[\begin{matrix}{e}^{j \frac{2 π ⋅ 0 ⋅ l}{N}} & {e}^{j \frac{2 π ⋅ 1 ⋅ l}{N}} & ⋯ & {e}^{j \frac{2 π ⋅ \left(M-1\right) ⋅ l}{N}}\end{matrix}\right]}^{T} ,$ wherein []^{T} is a matrix transpose, M and N are positive integers, and N_{C}≥N or N_{D}≥N.
Embodiment 29. The user equipment according to any one of embodiments 25 to 28, wherein the first reference signal set comprises at least one reference signal subset, and the reference signal subset is associated with a set of the matrix **C** or the matrix **D.**
Embodiment 30. The user equipment according to embodiment 29, wherein the reference signal subset has a sending period longer than that of another reference signal.
Embodiment 31. A base station, comprising:
   a sending unit, configured to send a first reference signal set to user equipment, wherein the first reference signal set is associated with a user equipment-specific matrix or matrix set; and
   a receiving unit, configured to receive a precoding matrix indicator PMI sent by the user equipment, wherein the PMI is used for indicating a precoding matrix that is selected based on the first reference signal by the user equipment, and the precoding matrix is a function of the user equipment-specific matrix or matrix set.
Embodiment 32. The base station according to embodiment 31, wherein the sending unit is further configured to notify the user equipment of the user equipment-specific matrix or matrix set.
Embodiment 33. The base station according to embodiment 31, wherein the first reference signal set comprises one or more reference signal subsets, and the reference signal subset corresponds to a co-polarized antenna port subset, or corresponds to an antenna port subset that is arranged in a same direction in an antenna port array, or corresponds to a quasi-co-location antenna port subset.
Embodiment 34. The base station according to any one of embodiments 31 to 33, wherein, the precoding matrix **W** is a product of two matrices **W**₁ and **W**₂, W = **W**₁**W**₂, wherein the matrix **W**₁ is a block diagonal matrix, the block diagonal matrix comprises at least one block matrix, and each block matrix is a function of the user equipment-specific matrix or matrix set.
Embodiment 35. The base station according to embodiment 34, wherein each block matrix **X** is a Kronecker kronecker product of two matrices **C** and **D, X** = **C**⊗**D,** and at least one matrix in the two matrices **C** and **D** is a function of the user equipment-specific matrix or matrix set.
36. The base station according to embodiment 35, wherein that at least one matrix in the two matrices **C** and **D** is a function of the user equipment-specific matrix or matrix set comprises that:
   a k^{th} column vector **c***ₖ* of the matrix **C** is: ${c}_{k} = diag \left\{1, {e}^{j 2 π / {N}_{C}}, ⋯, {e}^{j 2 {πN}_{V} / {N}_{C}}\right\} {a}_{m} ,$ or ${c}_{k} = diag \left\{1,{e}^{j 2 π / {N}_{C}},⋯,{e}^{j 2 π \left({N}_{V}/2-1\right) / {N}_{C}},{e}^{{jθ}_{△}},{e}^{{jθ}_{△}}{e}^{j 2 π / {N}_{C}},⋯,{e}^{{jθ}_{△}}{e}^{j 2 π \left({N}_{V}/2-1\right) / {N}_{C}}\right\} {a}_{m}$ or; an l^{th} column vector **d***ₗ* of the matrix **D** is: ${d}_{l} = diag \left\{1, {e}^{j 2 π / {N}_{D}}, ⋯, {e}^{j 2 {πN}_{H} / {N}_{D}}\right\} {a}_{m}$ or ${d}_{l} = diag \left\{1,{e}^{j 2 π / {N}_{D}},⋯,{e}^{j 2 π \left({N}_{H}/2-1\right) / {N}_{D}},{e}^{{jϕ}_{△}},{e}^{{jϕ}_{△}}{e}^{j 2 π / {N}_{D}},⋯,{e}^{{jϕ}_{△}}{e}^{j 2 π \left({N}_{H}/2-1\right) / {N}_{D}}\right\} {a}_{m}$ wherein N*_{V},* N*_{H},* N*_{C}*, and N*_{D}* are positive integers, **a***ₘ* is an m^{th} column vector of a matrix **A**, the matrix **A** is a matrix in the user equipment-specific matrix or matrix set, and *θ*_{△} and *φ*_{△} are phase shifts.
Embodiment 37. The base station according to any one of embodiments 31 to 36, wherein the matrix in the user equipment-specific matrix or matrix set is a matrix formed by columns being discrete Fourier transformation DFT vectors, or a matrix formed by column vectors of a Hadamard Hadamard matrix or a Householder Householder matrix.
Embodiment 38. The base station according to embodiment 37, wherein that columns of the matrix in the user equipment-specific matrix or matrix set are discrete Fourier transformation DFT vectors comprises that: the DFT vector **a***ₗ* satisfies: ${a}_{l} = {\left[\begin{matrix}{e}^{j \frac{2 π ⋅ 0 ⋅ l}{N}} & {e}^{j \frac{2 π ⋅ 1 ⋅ l}{N}} & ⋯ & {e}^{j \frac{2 π ⋅ \left(M-1\right) ⋅ l}{N}}\end{matrix}\right]}^{T} ,$ wherein []^{T} is a matrix transpose, M and N are positive integers, and N_{C} ≥ N or N_{D} ≥ N.
Embodiment 39. The base station according to any one of embodiments 35 to 38, wherein the first reference signal set comprises at least one reference signal subset, and the reference signal subset is associated with a set of the matrix **C** or the matrix **D.**
Embodiment 40. The base station according to embodiment 39, wherein the reference signal subset has a sending period longer than that of another reference signal.
Embodiment 41. User equipment, comprising:
   a receiver, configured to receive a first reference signal set sent by a base station, wherein the first reference signal set is associated with a user equipment-specific matrix or matrix set;
   a processor, configured to select a precoding matrix based on the first reference signal set, wherein the precoding matrix is a function of the user equipment-specific matrix or matrix set; and
   a transmitter, configured to send a precoding matrix indicator PMI to the base station, wherein the PMI corresponds to the selected precoding matrix.
Embodiment 42. Abase station, comprising:
   a transmitter, configured to send a first reference signal set to user equipment, wherein the first reference signal set is associated with a user equipment-specific matrix or matrix set; and
   a receiver, configured to receive a precoding matrix indicator PMI sent by the user equipment, wherein the PMI is used for indicating a precoding matrix that is selected based on the first reference signal by the user equipment, and the precoding matrix is a function of a subset of the user equipment-specific matrix or matrix set.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for determining a precoding matrix indicator, comprising:
receiving (101) a first reference signal set sent by a base station, wherein the first reference signal set is associated with a user equipment-specific matrix set, and each matrix in the user equipment-specific matrix set comprises at least one column, and each column comprises at least two rows;
selecting (102) a precoding matrix based on the first reference signal set, wherein the precoding matrix W is a product of two matrices W₁ and W₂, W=W₁W₂, the matrix W₁ is a block diagonal matrix comprising two same block matrices X, each block matrix X is a kronecker product of two matrices C and D, X=C⊗D, and at least one matrix in the two matrices C and D is a function of the user equipment-specific matrix set, and each matrix of the matrix W₂, the matrix C and the matrix D comprises at least one column, and each column comprises at least two rows; and
sending (103) a precoding matrix indicator, PMI, to the base station, wherein the PMI corresponds to the selected precoding matrix, wherein the PMI comprises three indexes i₆, i₇ and i₈, wherein the index i₆ indicates the matrix C, the index i₇ indicates the matrix D, and the index i₈ indicates the matrix W₂.

2. The method according to claim 1, wherein the matrix C and the matrix D are respectively a function of matrix A and matrix B in the user equipment-specific matrix set.

3. The method according to claim 2, wherein
each column in the matrix C is a column in the matrix A; and
each column in the matrix D is a column in the matrix B.

4. The method according to claim 2 or 3, wherein
the matrix A is a matrix whose columns are discrete Fourier Transformation, DFT vectors; and
the matrix B is a matrix whose columns are DFT vectors.

5. The method according to any one of claims 1 to 4, wherein W₂ is used for selection or weighted combination of column vectors in the matrix W₁, so as to form the matrix W.

6. The method according to any one of claims 1 to 5, wherein the user equipment-specific matrix set is notified by the base station.

7. The method according to any one of claims 1 to 6, wherein the first reference signal set comprises more reference signal subsets, and each reference signal subset corresponds to one of the following:
a subset of co-polarized antenna ports;
a subset of antenna ports that are arranged in a same direction in an antenna port array; and
a subset of antenna ports that are quasi-co-located.

8. The method according to any one of claims 1 to 7, wherein the precoding matrix W supports quantization in a vertical direction and a horizontal direction.

9. The method according to any one of claims 2 to 4, wherein, the matrix C is not equal to the matrix A, and the matrix D is not equal to the matrix B.

10. User equipment (40), comprising:
a receiving unit (41), configured to receive a first reference signal set sent by a base station, wherein the first reference signal set is associated with a user equipment-specific matrix set, and each matrix in the user equipment-specific matrix set comprises at least one column, and each column comprises at least two rows;
a determining unit (42), configured to select a precoding matrix based on the first reference signal set, wherein the precoding matrix W is a product of two matrices W₁ and W₂, W=W₁W₂, the matrix W₁ is a block diagonal matrix comprising two same block matrices X, each block matrix X is a kronecker product of two matrices C and D, X=C⊗D, and at least one matrix in the two matrices C and D is a function of the user equipment-specific matrix set, and each matrix of the matrix W₂, the matrix C and the matrix D comprises at least one column, and each column comprises at least two rows; and
a sending unit (43), configured to send a precoding matrix indicator, PMI, to the base station, wherein the PMI corresponds to the selected precoding matrix, wherein the PMI comprises three indexes i₆, i₇ and i₈, wherein the index i₆ indicates the matrix C, the index i₇ indicates the matrix D, and the index i₈ indicates the matrix W₂.

11. The user equipment according to claim 10, wherein the matrix C and the matrix D are respectively a function of matrix A and matrix B in the user equipment-specific matrix set, the matrix C is not equal to the matrix A, and the matrix D is not equal to the matrix B.

12. The user equipment according to claim 11, wherein
each column in the matrix C is a column in the matrix A; and
each column in the matrix D is a column in the matrix B.

13. The user equipment according to claim 11 or 12, wherein
the matrix A is a matrix whose columns are discrete Fourier Transformation, DFT vectors; and
the matrix B is a matrix whose columns are DFT vectors.

14. The user equipment according to any one of claims 10 to 13, wherein W₂ is used for selection or weighted combination of column vectors in the matrix W₁, so as to form the matrix W.

15. The user equipment according to any one of claims 10 to 14, wherein the user equipment-specific matrix set is notified by the base station.

16. The user equipment according to any one of claims 10 to 15, wherein the first reference signal set comprises more reference signal subsets, and each reference signal subset corresponds to one of the following:
a subset of co-polarized antenna ports;
a subset of antenna ports that are arranged in a same direction in an antenna port array; and
a subset of antenna ports that are quasi-co-located.

17. The user equipment according to any one of claims 10 to 16, wherein the precoding matrix W supports quantization in a vertical direction and a horizontal direction.

18. The method according to any one of claims 10 to 13, wherein, the matrix C is not equal to the matrix A, and the matrix D is not equal to the matrix B.

19. A computer readable storage medium comprising instructions which, when executed by a computer, cause the computer to carry out a method according to any one of claims 1 to 9.

20. A computer program comprising instructions which, when the program is executed by a computer, cause the computer to carry out a method according to any one of claims 1 to 9.

## Patentansprüche

1. Verfahren zum Bestimmen eines Vorcodierungsmatrixindikators, das Folgendes umfasst:
Empfangen (101) eines von einer Basisstation gesendeten ersten Referenzsignalsatzes, wobei der erste Referenzsignalsatz mit einem benutzergerätespezifischen Matrixsatz verknüpft ist, und jede Matrix in dem benutzergerätespezifischen Matrixsatz mindestens eine Spalte umfasst, und jede Spalte mindestens zwei Reihen umfasst;
Auswählen (102) einer Vorcodierungsmatrix, basierend auf dem ersten Referenzsignalsatz, wobei die Vorcodierungsmatrix W ein Produkt von zwei Matrizes W₁ und W₂ ist, W=W₁W₂ ist, die Matrix W₁ eine Blockdiagonalmatrix ist, die zwei gleiche Blockmatrizes X umfasst, jede Blockmatrix X ein Kroneckerprodukt von zwei Matrizes C und D ist, X=C⊗D ist, und mindestens eine Matrix in den beiden Matrizes C und D eine Funktion des benutzergerätespezifischen Matrixsatzes ist, und jede Matrix der Matrix W₂, der Matrix C und der Matrix D mindestens eine Spalte umfasst, und jede Spalte mindestens zwei Reihen umfasst; und
Senden (103) eines Vorcodierungsmatrixindikators (PMI) zu der Basisstation, wobei der PMI der ausgewählten Vorcodierungsmatrix entspricht, wobei der PMI drei Indizes i₆, i₇ und i₈ umfasst, wobei der Index i₆ die Matrix C angibt, der Index i₇ die Matrix D angibt, und der Index i₈ die Matrix W₂ angibt.

2. Verfahren gemäß Anspruch 1, wobei die Matrix C und die Matrix D jeweils eine Funktion der Matrix A und Matrix B in dem benutzergerätespezifischen Matrixsatz sind.

3. Verfahren gemäß Anspruch 2, wobei jede Spalte in der Matrix C eine Spalte in der Matrix A ist; und jede Spalte in der Matrix D eine Spalte in der Matrix B ist.

4. Verfahren gemäß Anspruch 2 oder 3, wobei die Matrix A eine Matrix ist, deren Spalten Vektoren der diskreten Fourier-Transformation (DFT) sind; und
die Matrix B eine Matrix ist, deren Spalten DFT-Vektoren sind.

5. Verfahren gemäß einem der Ansprüche 1 bis 4, wobei W₂ für Auswahl oder gewichtete Kombination von Spaltenvektoren in der Matrix W₁ verwendet wird, um die Matrix W zu bilden.

6. Verfahren gemäß einem der Ansprüche 1 bis 5, wobei der benutzergerätespezifische Matrixsatz durch die Basisstation gemeldet wird.

7. Verfahren gemäß einem der Ansprüche 1 bis 6, wobei der erste Referenzsignalsatz weitere Referenzsignal-Teilsätze umfasst, und jeder Referenzsignal-Teilsatz einem von Folgenden entspricht:
einem Teilsatz von co-polarisierten Antennenanschlüssen;
einem Teilsatz von Antennenanschlüssen, die in einer gleichen Richtung in einem Antennenanschlussarray angeordnet sind; und
einem Teilsatz von Antennenanschlüssen, die quasi co-lokalisiert sind.

8. Verfahren gemäß einem der Ansprüche 1 bis 7, wobei die Vorcodierungsmatrix W Quantisierung in einer vertikalen Richtung und einer horizontalen Richtung unterstützt.

9. Verfahren gemäß einem der Ansprüche 2 bis 4, wobei die Matrix C nicht gleich der Matrix A ist, und die Matrix D nicht gleich der Matrix B ist.

10. Benutzergerät (40), das Folgendes umfasst:
eine Empfangseinheit (41), die dazu ausgelegt ist, einen von einer Basisstation gesendeten ersten Referenzsignalsatz zu empfangen, wobei der erste Referenzsignalsatz mit einem benutzergerätespezifischen Matrixsatz verknüpft ist, und jede Matrix in dem benutzergerätespezifischen Matrixsatz mindestens eine Spalte umfasst, und jede Spalte mindestens zwei Reihen umfasst;
eine Bestimmungseinheit (42), die dazu ausgelegt ist, eine Vorcodierungsmatrix, basierend auf dem ersten Referenzsignalsatz, auszuwählen, wobei die Vorcodierungsmatrix W ein Produkt von zwei Matrizes W₁ und W₂ ist, W=W₁W₂ ist, die Matrix W₁ eine Blockdiagonalmatrix ist, die zwei gleiche Blockmatrizes X umfasst, jede Blockmatrix X ein Kroneckerprodukt von zwei Matrizes C und D ist, X=C⊗D ist, und mindestens eine Matrix in den beiden Matrizes C und D eine Funktion des benutzergerätespezifischen Matrixsatzes ist, und jede Matrix der Matrix W₂, der Matrix C und der Matrix D mindestens eine Spalte umfasst, und jede Spalte mindestens zwei Reihen umfasst; und
eine Sendeeinheit (43), die dazu ausgelegt ist, einen Vorcodierungsmatrixindikator, PMI, zu der Basisstation zu senden, wobei der PMI der ausgewählten Vorcodierungsmatrix entspricht, wobei der PMI drei Indizes i₆, i₇ und i₈ umfasst, wobei der Index i₆ die Matrix C angibt, der Index i₇ die Matrix D angibt, und der Index i₈ die Matrix W₂ angibt.

11. Benutzergerät gemäß Anspruch 10, wobei die Matrix C und die Matrix D jeweils eine Funktion der Matrix A und Matrix B in dem benutzergerätespezifischen Matrixsatz sind, die Matrix C nicht gleich der Matrix A ist, und die Matrix D nicht gleich der Matrix B ist.

12. Benutzergerät gemäß Anspruch 11, wobei
jede Spalte in der Matrix C eine Spalte in der Matrix A ist; und
jede Spalte in der Matrix D eine Spalte in der Matrix B ist.

13. Benutzergerät gemäß Anspruch 11 oder 12, wobei
die Matrix A eine Matrix ist, deren Spalten Vektoren der diskreten FourierTransformation, DFT, sind; und
die Matrix B eine Matrix ist, deren Spalten DFT-Vektoren sind.

14. Benutzergerät gemäß einem der Ansprüche 10 bis 13, wobei W₂ für Auswahl oder gewichtete Kombination von Spaltenvektoren in der Matrix W₁ verwendet wird, um die Matrix W zu bilden.

15. Benutzergerät gemäß einem der Ansprüche 10 bis 14, wobei der benutzergerätespezifische Matrixsatz durch die Basisstation gemeldet wird.

16. Benutzergerät gemäß einem der Ansprüche 10 bis 15, wobei der erste Referenzsignalsatz weitere Referenzsignal-Teilsätze umfasst, und jeder Referenzsignal-Teilsatz einem von Folgenden entspricht:
einem Teilsatz von co-polarisierten Antennenanschlüssen;
einem Teilsatz von Antennenanschlüssen, die in einer gleichen Richtung in einem Antennenanschlussarray angeordnet sind; und
einem Teilsatz von Antennenanschlüssen, die quasi co-lokalisiert sind.

17. Benutzergerät gemäß einem der Ansprüche 10 bis 16, wobei die Vorcodierungsmatrix W Quantisierung in einer vertikalen Richtung und einer horizontalen Richtung unterstützt.

18. Verfahren gemäß einem der Ansprüche 10 bis 13, wobei die Matrix C nicht gleich der Matrix A ist, und die Matrix D nicht gleich der Matrix B ist.

19. Computerlesbares Speichermedium, das Anweisungen enthält, die, wenn sie durch einen Computer ausgeführt werden, den Computer veranlassen, ein Verfahren gemäß einem der Ansprüche 1 bis 9 auszuführen.

20. Computerprogramm, das Anweisungen enthält, die, wenn das Programm durch einen Computer ausgeführt wird, den Computer veranlassen, ein Verfahren gemäß einem der Ansprüche 1 bis 9 auszuführen.

## Revendications

1. Procédé de détermination d'un indicateur de matrice de précodage, comprenant les étapes consistant à :
recevoir (101) un premier ensemble de signaux de référence envoyé par une station de base, le premier ensemble de signaux de référence étant associé à un ensemble de matrices spécifiques d'un équipement d'utilisateur, et chaque matrice dans l'ensemble de matrices spécifiques d'un équipement d'utilisateur comprenant au moins une colonne et chaque colonne comprenant au moins deux rangées ;
sélectionner (102) une matrice de précodage sur la base du premier ensemble de signaux de référence, la matrice de précodage W étant un produit de deux matrices W₁ et W₂, W=W₁W₂, la matrice W₁ étant une matrice diagonale par blocs comprenant deux matrices par blocs X identiques, chaque matrice par blocs X étant un produit de Kronecker de deux matrices C et D, X=C⊗D, et au moins une matrice des deux matrices C et D étant une fonction de l'ensemble de matrices spécifiques d'un équipement d'utilisateur, et chaque matrice de la matrice W₂, de la matrice C et de la matrice D comprenant au moins une colonne et chaque colonne comprenant au moins deux rangées ; et
envoyer (103) un indicateur de matrice de précodage (PMI) à la station de base, le PMI correspondant à la matrice de précodage sélectionnée, le PMI comprenant trois indices i₆, i₇ et i₈, l'indice i₆ indiquant la matrice C, l'indice i₇ indiquant la matrice D et l'indice i₈ indiquant la matrice W₂.

2. Procédé selon la revendication 1, dans lequel la matrice C et la matrice D sont respectivement une fonction d'une matrice A et d'une matrice B dans l'ensemble de matrices spécifiques d'un équipement d'utilisateur.

3. Procédé selon la revendication 2, dans lequel :
chaque colonne dans la matrice C est une colonne dans la matrice A ; et
chaque colonne dans la matrice D est une colonne dans la matrice B.

4. Procédé selon la revendication 2 ou 3, dans lequel :
la matrice A est une matrice dont les colonnes sont des vecteurs à transformée de Fourier discrète (DFT) ; et
la matrice B est une matrice dont les colonnes sont des vecteurs DFT.

5. Procédé selon l'une quelconque des revendications 1 à 4, dans lequel la matrice W₂ est utilisée pour une sélection ou une combinaison pondérée de vecteurs de colonne dans la matrice W₁, de manière à former la matrice W.

6. Procédé selon l'une quelconque des revendications 1 à 5, dans lequel l'ensemble de matrices spécifiques d'un équipement d'utilisateur est notifié par la station de base.

7. Procédé selon l'une quelconque des revendications 1 à 6, dans lequel le premier ensemble de signaux de référence comprend plusieurs sous-ensembles de signaux de référence et chaque sous-ensemble de signaux de référence correspond à un des sous-ensembles suivants :
un sous-ensemble de ports d'antenne copolarisés ;
un sous-ensemble de ports d'antenne qui sont agencés dans une même direction dans un réseau de ports d'antenne ; et
un sous-ensemble de ports d'antenne qui sont quasi cositués.

8. Procédé selon l'une quelconque des revendications 1 à 7, dans lequel la matrice de précodage W prend en charge une quantification dans une direction verticale et une direction horizontale.

9. Procédé selon l'une quelconque des revendications 2 à 4, dans lequel la matrice C n'est pas égale à la matrice A et la matrice D n'est pas égale à la matrice B.

10. Équipement d'utilisateur (40), comprenant :
une unité de réception (41), configurée pour recevoir un premier ensemble de signaux de référence envoyé par une station de base, le premier ensemble de signaux de référence étant associé à un ensemble de matrices spécifiques d'un équipement d'utilisateur, et chaque matrice dans l'ensemble de matrices spécifiques d'un équipement d'utilisateur comprenant au moins une colonne et chaque colonne comprenant au moins deux rangées ;
une unité de détermination (42), configurée pour sélectionner une matrice de précodage sur la base du premier ensemble de signaux de référence, la matrice de précodage W étant un produit de deux matrices W₁ et W₂, W=W₁W₂, la matrice W₁ étant une matrice diagonale par blocs comprenant deux matrices par blocs X identiques, chaque matrice par blocs X étant un produit de Kronecker de deux matrices C et D, X=C⊗D, et au moins une matrice des deux matrices C et D étant une fonction de l'ensemble de matrices spécifiques d'un équipement d'utilisateur, et chaque matrice de la matrice W₂, de la matrice C et de la matrice D comprenant au moins une colonne et chaque colonne comprenant au moins deux rangées ; et
une unité d'envoi (43), configurée pour envoyer un indicateur de matrice de précodage (PMI) à la station de base, le PMI correspondant à la matrice de précodage sélectionnée, le PMI comprenant trois indices i₆, i₇ et i₈, l'indice i₆ indiquant la matrice C, l'indice i₇ indiquant la matrice D et l'indice i₈ indiquant la matrice W₂.

11. Équipement d'utilisateur selon la revendication 10, dans lequel la matrice C et la matrice D sont respectivement une fonction d'une matrice A et d'une matrice B dans l'ensemble de matrices spécifiques d'un équipement d'utilisateur, la matrice C n'est pas égale à la matrice A et la matrice D n'est pas égale à la matrice B.

12. Équipement d'utilisateur selon la revendication 11, dans lequel :
chaque colonne dans la matrice C est une colonne dans la matrice A ; et
chaque colonne dans la matrice D est une colonne dans la matrice B.

13. Équipement d'utilisateur selon la revendication 11 ou 12, dans lequel :
la matrice A est une matrice dont les colonnes sont des vecteurs à transformée de Fourier discrète (DFT) ; et
la matrice B est une matrice dont les colonnes sont des vecteurs DFT.

14. Équipement d'utilisateur selon l'une quelconque des revendications 10 à 13, dans lequel la matrice W₂ est utilisée pour une sélection ou une combinaison pondérée de vecteurs de colonne dans la matrice W₁, de manière à former la matrice W.

15. Équipement d'utilisateur selon l'une quelconque des revendications 10 à 14, dans lequel l'ensemble de matrices spécifiques d'un équipement d'utilisateur est notifié par la station de base.

16. Équipement d'utilisateur selon l'une quelconque des revendications 10 à 15, dans lequel le premier ensemble de signaux de référence comprend plusieurs sous-ensembles de signaux de référence et chaque sous-ensemble de signaux de référence correspond à un des sous-ensembles suivants :
un sous-ensemble de ports d'antenne copolarisés ;
un sous-ensemble de ports d'antenne qui sont agencés dans une même direction dans un réseau de ports d'antenne ; et
un sous-ensemble de ports d'antenne qui sont quasi cositués.

17. Équipement d'utilisateur selon l'une quelconque des revendications 10 à 16, dans lequel la matrice de précodage W prend en charge une quantification dans une direction verticale et une direction horizontale.

18. Procédé selon l'une quelconque des revendications 10 à 13, dans lequel la matrice C n'est pas égale à la matrice A et la matrice D n'est pas égale à la matrice B.

19. Support de stockage lisible par ordinateur, comprenant des instructions qui, lorsqu'elles sont exécutées par un ordinateur, amènent l'ordinateur à réaliser un procédé selon l'une quelconque des revendications 1 à 9.

20. Programme informatique comprenant des instructions qui, lorsque le programme est exécuté par un ordinateur, amènent l'ordinateur à réaliser un procédé selon l'une quelconque des revendications 1 à 9.
